(19) Europäisches Patentamt
European Patent Office
Office européen des brevets

(11) EP 4 585 644 A1

(12) EUROPEAN PATENT APPLICATION
published in accordance with Art. 153(4) EPC

(43) Date of publication:
**16.07.2025 Bulletin 2025/29**

(21) Application number: **23862817.6**

(22) Date of filing: **27.07.2023**

(51) International Patent Classification (IPC):
***C08L 69/00*** *(2006.01)* ***C08K 3/013*** *(2018.01)*
***C08K 7/02*** *(2006.01)* ***C08K 7/14*** *(2006.01)*
***C08K 9/04*** *(2006.01)* ***C08L 63/00*** *(2006.01)*
***C08L 67/04*** *(2006.01)* ***C08L 71/10*** *(2006.01)*

(52) Cooperative Patent Classification (CPC):
**C08K 3/013; C08K 7/02; C08K 7/14; C08K 9/04; C08L 63/00; C08L 67/04; C08L 69/00; C08L 71/10**

(86) International application number:
**PCT/JP2023/027507**

(87) International publication number:
**WO 2024/053274 (14.03.2024 Gazette 2024/11)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **05.09.2022 JP 2022140577**
**02.12.2022 JP 2022193395**

(71) Applicant: **Teijin Limited**
**Osaka-shi, Osaka 530-0005 (JP)**

(72) Inventor: **OKUZAWA, Shunsuke**
**Osaka-shi, Osaka 530-0005 (JP)**

(74) Representative: **Kraus & Lederer PartGmbB**
**Thomas-Wimmer-Ring 15**
**80539 München (DE)**

# (54) POLYCARBONATE RESIN COMPOSITION AND MOLDED ARTICLE FORMED OF SAME

(57) The present invention provides a polycarbonate resin composition which has excellent tensile strength, wet heat resistance, chemical resistance and processability. A composition according to the present invention contains, relative to 100 parts by weight of (A) an aromatic polycarbonate resin (component A), 20 to 130 parts by weight of (B) glass fibers (component B), and 1 to 10 parts by weight of (C) a phenoxy resin and/or an epoxy resin (component C); the component B contains at least one compound that is selected from the group consisting of a surface treatment agent and a sizing agent; and a gas component that is obtained by heating the component B at 600°C for 12 seconds contains a carboxylic acid anhydride, or alternatively, a gas component that is obtained by heating the component B at 400°C for 12 seconds contains a compound that is represented by general formula (1). (In general formula (1), n represents an integer of 1 to 10; each X independently represents an alkylene group having 1 to 5 carbon atoms; and each Y independently represents an alkyl group having 1 to 5 carbon atoms.)

EP 4 585 644 A1

## Description

FIELD

The present invention relates to a polycarbonate resin composition including an aromatic polycarbonate-based resin, a glass fiber containing a surface treatment agent and/or a sizing agent, in which a gas component obtained by heating at 600°C for 12 seconds contains carboxylic anhydride or a gas component obtained by heating at 400°C for 12 seconds contains a specified compound, and a phenoxy resin and/or an epoxy resin, as well as a molded article formed from the polycarbonate resin composition. More specifically, the present invention relates to a polycarbonate resin composition which is excellent in tensile strength, wet heat resistance, chemical resistance and processability and which is suited to a member required to have high strength under various environments.

BACKGROUND

Polycarbonate resins are resins excellent in heat resistance, impact resistance, dimension stability, and the like, and are widely used in the electric/electronic part field, the mechanism part field, the automobile part field, the OA equipment part field, and the like. In recent years, products have been recently progressively higher in performance and higher in lifetime, and thus resin materials have been strongly demanded to have high strength and keep high strength even when used for a long time particularly under a wet heat environment or under an environment of contact with chemicals.

Conventionally, in order to improve mechanical properties of polycarbonate resins, such as tensile strength, there have been known a method in which a fibrous filler is added (PTL 1) and a method in which a fibrous filling material and an adhesion improver are added in order to further improve strength (see PTLs 2 and 3). However, mechanical properties such as tensile strength have been improved, whereas wet heat resistance and chemical resistance have not been mentioned, and it has never been said that methods for solving such technical problems are sufficiently disclosed.

[CITATION LIST]

[PATENT LITERATURE]

[PTL 1] Japanese Patent Publication No. 2683662
[PTL 2] Japanese Unexamined Patent Publication (Kokai) No. 2009-292953
[PTL 3] Japanese Unexamined Patent Publication (Kokai) No. 2013-221072


SUMMARY

[TECHNICAL PROBLEM]

In view of the above, an object of the present invention is to provide a polycarbonate resin composition which is excellent in tensile strength, wet heat resistance, chemical resistance and processability and which is suited to a member required to keep high strength even under a wet heat environment and under an environment of contact with chemicals.

[SOLUTION TO PROBLEM]

The present inventor has made intensive studies in order to solve the above problems, and as a result, has found that a polycarbonate resin composition excellent in tensile strength, wet heat resistance, chemical resistance and processability is obtained by blending, with an aromatic polycarbonate-based resin, a glass fiber containing a surface treatment agent and/or a sizing agent, the glass fiber being a glass fiber in which a gas component obtained by heating at 600°C for 12 seconds contains carboxylic anhydride or a gas component obtained by heating at 400°C for 12 seconds contains a specified compound, and a phenoxy resin and/or an epoxy resin, thereby leading to completion of the present invention.

Specifically, the present invention is as follows.

1. A polycarbonate resin composition containing, 100 parts by weight of (A) an aromatic polycarbonate-based resin (component A), 20 to 130 parts by weight of (B) a glass fiber (component B) and 1 to 10 parts by weight of (C) a phenoxy resin and/or an epoxy resin (component C), wherein the component B contains at least one compound selected from

the group consisting of a surface treatment agent and a sizing agent, and a gas component obtained by heating the component B at 600°C for 12 seconds contains carboxylic anhydride, or a gas component obtained by heating the component B at 400°C for 12 seconds contains a compound represented by general formula (1) below:

[Chem. 1]

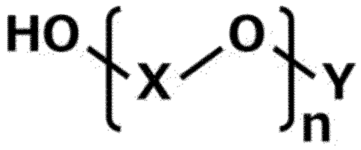

(1)

wherein in the above general formula (1), n is an integer of 1 to 10, X each independently represents an alkylene group having 1 to 5 carbon atoms, and Y each independently represents an alkyl group having 1 to 5 carbon atoms.

2. The polycarbonate resin composition according to item 1, wherein the carboxylic anhydride is 1,2,3,6-tetrahydrophthalic anhydride.

3. The polycarbonate resin composition according to item 1, wherein X in the compound represented by the above general formula (1) is an alkylene group having 3 carbon atoms.

4. The polycarbonate resin composition according to item 1 or 3, wherein the compound represented by the above general formula (1) is 4,8,12,16-tetraoxaeicosan-1-ol.

5. The polycarbonate resin composition according to any of items 1 to 4, wherein the component C is a bisphenol A-type phenoxy resin and/or a bisphenol A-type epoxy resin.

6. The polycarbonate resin composition according to any of items 1 to 5, further containing, relative to 100 parts by weight of the component A, 0.01 to 3 parts by weight of (D) a phosphorus-based flame retardant (component D).

7. The polycarbonate resin composition according to any of items 1 to 6, further containing, relative to 100 parts by weight of the component A, 0.01 to 35 parts by weight of (E) a flame retardant (component E) and 0.1 to 3 parts by weight of (F) an anti-drip agent (component F).

8. The polycarbonate resin composition according to any of items 1 to 7, further containing, relative to 100 parts by weight of the component A, 1 to 20 parts by weight of (G) a liquid crystal polyester resin (component G).

9. The polycarbonate resin composition according to item 8, wherein the component G is a liquid crystal polyester resin containing a repeating unit derived from p-hydroxybenzoic acid and a repeating unit derived from 6-hydroxy-2-naphthoic acid.

10. A molded article formed from the polycarbonate resin composition according to any of items 1 to 9.

[ADVANTAGEOUS EFFECTS OF INVENTION]

The polycarbonate resin composition of the present invention is excellent in tensile strength, wet heat resistance, chemical resistance and processability. These properties are not found in conventional techniques, and therefore the industrial effects exerted by the present invention are extremely large.

DESCRIPTION OF EMBODIMENTS

Hereinafter, details of the present invention will be described.

(Component A: aromatic polycarbonate-based resin)

The aromatic polycarbonate-based resin used as component A in the present invention is obtained by reacting a dihydric phenol with a carbonate precursor. Examples of the reaction method can include interfacial polymerization, melt transesterification, solid-phase transesterification of a carbonate prepolymer, and ring-opening polymerization of a cyclic carbonate compound.

Representative examples of the dihydric phenol used herein include hydroquinone, resorcinol, 4,4'-biphenol, 1,1-bis(4-hydroxyphenyl)ethane, 2,2-bis(4-hydroxyphenyl)propane (commonly known as bisphenol A), 2,2-bis(4-hydroxy-3-methylphenyl)propane, 2,2-bis(4-hydroxyphenyl)butane, 1,1-bis(4-hydroxyphenyl)-1-phenylethane, 1,1-bis(4-hydroxyphenyl)cyclohexane, 1,1-bis(4-hydrophenyl)-3,3,5-trimethylcyclohexane, 2,2-bis(4-hydroxyphenyl)pentane, 4,4'-(p-phenylenediisopropylidene)diphenol, 4,4'-(m-phenylenediisopropylidene)diphenol, 1,1-bis(4-hydroxyphenyl)-4-isopropylcyclohexane, bis(4-hydroxyphenyl)oxide, bis(4-hydroxyphenyl)sulfide, bis(4-hydroxyphenyl)sulfoxide, bis(4-hydroxyphenyl)sulfone, bis(4-hydroxyphenyl)ketone, bis(4-hydroxyphenyl)ester, bis(4-hydroxy-3-methylphenyl)sulfide, 9,9-bis(4-hydroxyphenyl)fluorene, and 9,9-bis(4-hydroxy-3-methylphenyl)fluorene. The preferable dihydric phenol is bis(4-hydroxyphenyl)alkane. Among these, bisphenol A is particularly preferable from the viewpoint of impact resistance, and is generally used.

In the present invention, in addition to bisphenol A-based polycarbonates, which are general-purpose polycarbonates, special polycarbonates manufactured using other dihydric phenols can be used as the component A.

For example, polycarbonates (homopolymer or copolymer) using 4,4'-(m-phenylenediisopropylidene)diphenol (hereinafter, sometimes abbreviated as "BPM"), 1,1-bis(4-hydroxyphenyl)cyclohexane, 1,1-bis(4-hydroxyphenyl)-3,3,5-trimethylcyclohexane (hereinafter, sometimes abbreviated as "Bis-TMC"), 9,9-bis(4-hydroxyphenyl)fluorene, and 9,9-bis(4-hydroxy-3-methylphenyl)fluorene (hereinafter, sometimes abbreviated as "BCF") as a part or all of the dihydric phenol component are appropriate for applications where the requirements for dimensional change due to water absorption and shape stability are particularly strict. The dihydric phenol other than BPA is preferably used in an amount of 5 mol% or greater, particularly 10 mol% or greater, of the entire dihydric phenol component constituting the polycarbonate.

Especially, when high rigidity and more satisfactory hydrolysis resistance are required, it is particularly preferred that the component A constituting the resin composition be a copolymer polycarbonate of the following (1) to (3)

(1) A copolymer polycarbonate in which, in 100 mol% of the dihydric phenol component constituting the polycarbonate, BPM is 20 to 80 mol% (more preferably 40 to 75 mol%, even more preferably 45 to 65 mol%) and BCF is 20 to 80 mol% (more preferably 25 to 60 mol%, even more preferably 35 to 55 mol%).
(2) A copolymer polycarbonate in which, in 100 mol% of the dihydric phenol component constituting the polycarbonate, BPA is 10 to 95 mol% (more preferably 50 to 90 mol%, even more preferably 60 to 85 mol%) and BCF is 5 to 90 mol% (more preferably 10 to 50 mol%, even more preferably 15 to 40 mol%).
(3) A copolymer polycarbonate in which, in 100 mol% of the dihydric phenol component constituting the polycarbonate, BPM is 20 to 80 mol% (more preferably 40 to 75 mol%, even more preferably 45 to 65 mol%) and Bis-TMC is 20 to 80 mol% (more preferably 25 to 60 mol%, even more preferably 35 to 55 mol%).

These special polycarbonates may be used independently, or may be used by appropriately mixing two or more thereof. These can also be used in combination by mixing with a generally used bisphenol A type polycarbonate.

The manufacturing methods and characteristics of these special polycarbonates are described in detail in, for example, Japanese Unexamined Patent Publication (Kokai) No. 6-172508, Japanese Unexamined Patent Publication (Kokai) No. 8-27370, Japanese Unexamined Patent Publication (Kokai) No. 2001-55435, and Japanese Unexamined Patent Publication (Kokai) No. 2002-117580.

Among the various polycarbonates described above, those having water absorption rate and Tg (glass transition temperature) within the following ranges by adjusting the copolymer composition have satisfactory hydrolysis resistance of the polymer itself and are particularly excellent in terms of low warping after molding, and thus are particularly preferred in fields where shape stability is required.

(i) Polycarbonates in which water absorption rate is 0.05 to 0.15%, preferably 0.06 to 0.13%, and Tg is 120 to 180°C, or
(ii) polycarbonate. polycarbonates in which Tg is 160 to 250°C, preferably 170 to 230°C, and water absorption rate is 0.10 to 0.30%, preferably 0.13 to 0.30%, and more preferably 0.14 to 0.27%.

The water absorption rate of the polycarbonate is a value obtained by using a disk-like test piece having a diameter of 45 mm and a thickness of 3.0 mm and measuring the water content after immersion in water at 23°C for 24 h in accordance with ISO 62-1980. The Tg (glass transition temperature) is a value determined by differential scanning calorimetry (DSC) in accordance with JIS K7121.

As the carbonate precursor, a carbonyl halide, carbonic acid diester, or haloformate is used. Specific examples include phosgene, diphenyl carbonate, and dihaloformates of dihydric phenols.

When the aromatic polycarbonate resin is manufactured by a method of interfacial polymerization of the dihydric phenol and carbonate precursor, a catalyst, a terminating agent, and an antioxidant for preventing oxidation of the dihydric phenol may be used as needed. The aromatic polycarbonate resin in the present invention includes branched polycarbonate resins copolymerized with a trifunctional or higher polyfunctional aromatic compound, polyester carbonate resins copolymerized with an aromatic or aliphatic (including alicyclic) bifunctional carboxylic acid, copolymer polycarbonate resins copolymerized with a bifunctional alcohol (including alicyclic), and polyesters carbonate resins copolymerized with both of such a bifunctional carboxylic acid and a bifunctional alcohol. The aromatic polycarbonate resin may be a mixture in which two or more of obtained polycarbonate resins are mixed.

The branched polycarbonate resin can impart an anti-drip performance to the resin composition of the present invention. Examples of trifunctional or higher polyfunctional aromatic compounds used in such a branched polycarbonate

resin include phloroglucine, phloroglucide, trisphenols such as 4,6-dimethyl-2,4,6-tris(4-hydroxydiphenyl)heptene-2, 2,4,6-trimethyl-2,4,6-tris(4-hydroxyphenyl)heptane, 1,3,5-tris(4-hydroxyphenyl)benzene, 1,1,1-tris(4-hydroxyphenyl) ethane, 1,1,1-tris(3,5-dimethyl-4-hydroxyphenyl)ethane, 2,6-bis(2-hydroxy-5-methylbenzyl)-4-methylphenol, and 4-{4-[1,1-bis(4-hydroxyphenyl)ethyl]benzene}-α,α-dimethylbenzylphenol; tetra(4-hydroxyphenyl)methane, bis(2,4-dihydroxyphenyl)ketone, 1,4-bis(4,4-dihydroxytriphenylmethyl)benzene; trimellitic acid, pyromellitic acid, benzophenonetetracarboxylic acid, and acid chlorides thereof. Among these, 1,1,1-tris(4-hydroxyphenyl)ethane and 1,1,1-tris(3,5-dimethyl-4-hydroxyphenyl)ethane are preferable, and 1,1,1-tris(4-hydroxyphenyl)ethane is particularly preferable.

The structural units derived from the polyfunctional aromatic compound in the branched polycarbonate are preferably 0.01 to 1 mol%, more preferably 0.05 to 0.9 mol%, and even more preferably 0.05 to 0.8 mol% in a total of 100 mol% of the structural units derived from the dihydric phenol and the structural units derived from such a polyfunctional aromatic compound.

Particularly in the case of a melt transesterification method, as a side reaction, branched structural units may be generated, and it is preferable that the amount of such branched structural units be preferably 0.001 to 1 mol%, more preferably 0.005 to 0.9 mol% and even more preferably 0.01 to 0.8 mol% in a total of 100 mol% of the structural units derived from the dihydric phenol and the branched structural units. The ratio of such branched structures can be calculated from $^1$H-NMR measurements.

The aliphatic bifunctional carboxylic acid is preferably an α,ω-dicarboxylic acid. Examples of the aliphatic bifunctional carboxylic acid preferably include linear saturated aliphatic dicarboxylic acids such as sebacic acid (decanedioic acid), dodecanedioic acid, tetradecanedioic acid, octadecanedioic acid and eicosanedioic acid; and alicyclic dicarboxylic acids such as cyclohexanedicarboxylic acid. As the bifunctional alcohol, alicyclic diols are more preferred, and are exemplified by, for example, cyclohexanedimethanol, cyclohexanediol, and tricyclodecanedimethanol.

Reaction modes such as interfacial polymerization, melt transesterification, solid-phase transesterification of a carbonate prepolymer, and ring-opening polymerization of a cyclic carbonate compound, which are methods of manufacturing the aromatic polycarbonate-based resin, are methods that are well known in various literatures and patent publications.

When manufacturing the polycarbonate resin composition of the present invention, the viscosity average molecular weight (M) of the aromatic polycarbonate-based resin is not particularly limited, but is preferably $1 \times 10^4$ to $5 \times 10^4$, more preferably $1.4 \times 10^4$ to $3 \times 10^4$, even more preferably $1.4 \times 10^4$ to $2.4 \times 10^4$, and particularly preferably $1.7 \times 10^4$ to $2.1 \times 10^4$. In a polycarbonate-based resin having a viscosity average molecular weight of less than $1 \times 10^4$, satisfactory mechanical properties, particularly, high tensile strength may not be obtained. In a resin composition obtained from an aromatic polycarbonate-based resin having a viscosity average molecular weight of greater than $5 \times 10^4$, general-purpose properties may be inferior in that fluidity in injection molding is inferior.

The aromatic polycarbonate-based resin may be obtained by mixing those having a viscosity average molecular weight out of the above range. Particularly, a polycarbonate-based resin having a viscosity average molecular weight greater than the range ($5 \times 10^4$) is improved in entropic elasticity of the resin. As a result, satisfactory processability is exhibited in gas-assist molding and foam molding which may be used in molding of a reinforcing resin material into a structural member. Such an improvement in processability is more satisfactory than the case of the branched polycarbonate. In a more preferred embodiment, a polycarbonate-based resin (component A-1) in which the component A is composed of a polycarbonate-based resin (component A-1-1) having a viscosity average molecular weight of $7 \times 10^4$ to $3 \times 10^5$ and an aromatic polycarbonate resin (component A-1-2) having a viscosity average molecular weight of $1 \times 10^4$ to $3 \times 10^4$ and the viscosity average molecular weight is $1.6 \times 10^4$ to $3.5 \times 10^4$ (hereinafter, sometimes referred to as "high-molecular-weight component-containing polycarbonate-based resin") can also be used.

In such a high-molecular-weight component-containing polycarbonate-based resin (component A-1), the molecular weight of the component A-1-1 is preferably $7 \times 10^4$ to $2 \times 10^5$, more preferably $8 \times 10^4$ to $2 \times 10^5$, even more preferably $1 \times 10^5$ to $2 \times 10^5$, and particularly preferably $1 \times 10^5$ to $1.6 \times 10^5$. The molecular weight of the component A-1-2 is preferably $1 \times 10^4$ to $2.5 \times 10^4$, more preferably $1.1 \times 10^4$ to $2.4 \times 10^4$, even more preferably $1.2 \times 10^4$ to $2.4 \times 10^4$, and particularly preferably $1.2 \times 10^4$ to $2.3 \times 10^4$.

The high-molecular-weight component-containing polycarbonate-based resin (component A-1) can be obtained by mixing the component A-1-1 and the component A-1-2 at various ratios and adjusting such ratios so that a predetermined molecular weight range is satisfied. In 100% by weight of the component A-1, a case of 2 to 40% by weight of the component A-1-1 is preferred, a case of 3 to 30% by weight of the component A-1-1 is more preferred, a case of 4 to 20% by weight of the component A-1-1 is even more preferred, and a case of 5 to 20% by weight of the component A-1-1 is particularly preferred.

Examples of the method of preparing the component A-1 can include (1) a method in which the component A-1-1 and the component A-1-2 are each independently polymerized and then mixed, (2) a method in which a method of manufacturing an aromatic polycarbonate resin exhibiting a plurality of peaks assigned to polymers in a molecular weight distribution chart by the GPC method in the same system, as typified by a method shown in Japanese Unexamined Patent Publication (Kokai) No. H05-306336, is used to manufacture such an aromatic polycarbonate resin so that conditions of

the component A-1 in the present invention are satisfied, and (3) a method in which the aromatic polycarbonate resin obtained by such a manufacturing method (the manufacturing method of (2)), and the component A-1-1 and/or the component A-1-2 separately manufactured are mixed.

For the viscosity average molecular weight referred to in the present invention, a specific viscosity (ηSP) to be calculated by the following formula is determined from a solution having 0.7 g of the polycarbonate dissolved in 100 ml of methylene chloride at 20°C using an Ostwald viscometer,

$$\text{Specific viscosity } (\eta SP) = (t - t_0)/t_0$$

[$t_0$ is number of seconds to drop methylene chloride, and t is number of seconds to drop the sample solution.] and from the resulting specific viscosity (ηSP), a viscosity average molecular weight M is calculated by the following mathematical formula.

$$\eta SP/c = [\eta] + 0.45 \times [\eta]^2 c$$

(where [η] is the intrinsic viscosity)

$$[\eta] = 1.23 \times 10^{-4} M^{0.83}$$

$$c = 0.7$$

The viscosity average molecular weight of the aromatic polycarbonate-based resin is calculated by the following procedure. Specifically, the composition is mixed with 20- to 30-fold in weight of methylene chloride, and soluble portion in the composition is dissolved. The soluble portion is collected by celite filtration. The solvent in the resulting solution is then removed. The solid after solvent removal is thoroughly dried to obtain a solid of the component to be dissolved in methylene chloride. From a solution having 0.7 g of the solid dissolved in 100 ml of methylene chloride, a specific viscosity at 20°C is determined in the same manner as described above, and from the specific viscosity, a viscosity average molecular weight M is calculated in the same manner as described above.

A polycarbonate-polydiorganosiloxane copolymer resin can also be used as the aromatic polycarbonate-based resin. The polycarbonate-polydiorganosiloxane copolymer resin is preferably a copolymer resin prepared by copolymerizing a dihydric phenol represented by general formula (2) below and a hydroxyaryl-terminated polydiorganosiloxane represented by general formula (4) below.

[Chem. 2]

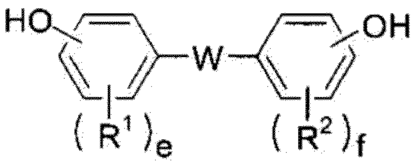

(2)

In the above general formula (2), $R^1$ and $R^2$ each independently represent a hydrogen atom, a halogen atom, or a group selected from the group consisting of an alkyl group having 1 to 18 carbon atoms, an alkoxy group having 1 to 18 carbon atoms, a cycloalkyl group having 6 to 20 carbon atoms, a cycloalkoxy group having 6 to 20 carbon atoms, an alkenyl group having 2 to 10 carbon atoms, an aryl group having 6 to 14 carbon atoms, an aryloxy group having 6 to 14 carbon atoms, an aralkyl group having 7 to 20 carbon atoms, an aralkyloxy group having 7 to 20 carbon atoms, a nitro group, an aldehyde group, a cyano group, and a carboxy group, and if there are a plurality of $R^1$ or $R^2$, they may be the same or different; e and f are each an integer of 1 to 4; and W is a single bond or at least one group selected from the group consisting of groups represented by general formula (3) below.

[Chem. 3]

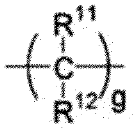 , 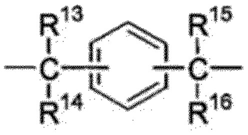 , 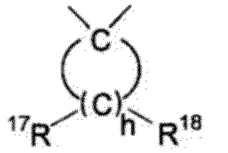 , 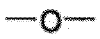 , 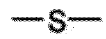

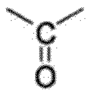 , 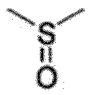 , 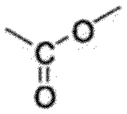 , 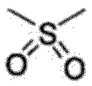 , 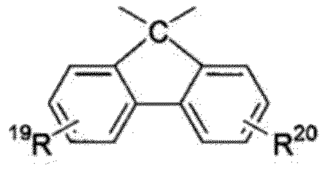 (3)

In the above general formula (3), $R^{11}$, $R^{12}$, $R^{13}$, $R^{14}$, $R^{15}$, $R^{16}$, $R^{17}$ and $R^{18}$ each independently represent a hydrogen atom, or a group selected from the group consisting of an alkyl group having 1 to 18 carbon atoms, an aryl group having 6 to 14 carbon atoms, and an aralkyl group having 7 to 20 carbon atoms, $R^{19}$ and $R^{20}$ each independently represent a hydrogen atom, a halogen atom, or a group selected from the group consisting of an alkyl group having 1 to 18 carbon atoms, an alkoxy group having 1 to 10 carbon atoms, a cycloalkyl group having 6 to 20 carbon atoms, a cycloalkoxy group having 6 to 20 carbon atoms, an alkenyl group having 2 to 10 carbon atoms, an aryl group having 6 to 14 carbon atoms, an aryloxy group having 6 to 10 carbon atoms, an aralkyl group having 7 to 20 carbon atoms, an aralkyloxy group having 7 to 20 carbon atoms, a nitro group, an aldehyde group, a cyano group, and a carboxy group, and if there are a plurality of $R^{19}$ or $R^{20}$, they may be the same or different; g is an integer of 1 to 10; and h is an integer of 4 to 7.

[Chem. 4]

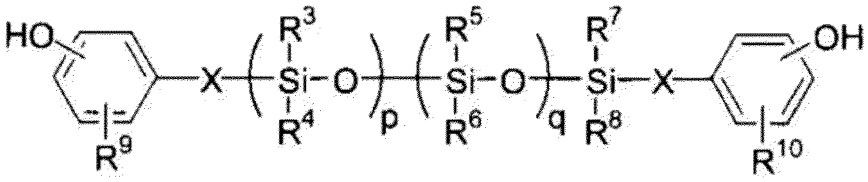 (4)

In the above general formula (4), $R^3$, $R^4$, $R^5$, $R^6$, $R^7$ and $R^8$ are each independently a hydrogen atom, an alkyl group having 1 to 12 carbon atoms, or a substituted or unsubstituted aryl group having 6 to 12 carbon atoms; $R^9$ and $R^{10}$ are each independently a hydrogen atom, a halogen atom, an alkyl group having 1 to 10 carbon atoms, or an alkoxy group having 1 to 10 carbon atoms; p is a natural number; q is 0 or a natural number; and p + q is a natural number of 10 to 300. X is a divalent aliphatic group having 2 to 8 carbon atoms.

Examples of the dihydric phenol (I) represented by general formula (2) include 4,4'-dihydroxybiphenyl, bis(4-hydroxyphenyl)methane, 1,1-bis(4-hydroxyphenyl)ethane, 1,1-bis(4-hydroxyphenyl)-1-phenylethane, 2,2-bis(4-hydroxyphenyl)propane, 2,2-bis(4-hydroxy-3-methylphenyl)propane, 1,1-bis(4-hydroxyphenyl)-3,3,5-trimethylcyclohexane, 2,2-bis(4-hydroxy-3,3'-biphenyl)propane, 2,2-bis(4-hydroxy-3-isopropylphenyl)propane, 2,2-bis(3-t-butyl-4-hydroxyphenyl)propane, 2,2-bis(4-hydroxyphenyl)butane, 2,2-bis(4-hydroxyphenyl)octane, 2,2-bis(3-bromo-4-hydroxyphenyl)propane, 2,2-bis(3,5-dimethyl-4-hydroxyphenyl)propane, 2,2-bis(3-cyclohexyl-4-hydroxyphenyl)propane, 1,1-bis(3-cyclohexyl-4-hydroxyphenyl)cyclohexane, bis(4-hydroxyphenyl)diphenylmethane, 9,9-bis(4-hydroxyphenyl)fluorene, 9,9-bis(4-hydroxy-3-methylphenyl)fluorene, 1,1-bis(4-hydroxyphenyl)cyclohexane, 1,1-bis(4-hydroxyphenyl)cyclopentane, 4,4'-dihydroxydiphenyl ether, 4,4'-dihydroxy-3,3'-dimethyldiphenyl ether, 4,4'-sulfonyldiphenol, 4,4'-dihydroxydiphenyl sulfoxide, 4,4'-dihydroxydiphenyl sulfide, 2,2'-dimethyl-4,4'-sulfonyldiphenol, 4,4'-dihydroxy-3,3'-dimethyldiphenyl sulfoxide, 4,4'-dihydroxy-3,3'-dimethyldiphenyl sulfide, 2,2'-diphenyl-4,4'-sulfonyldiphenol, 4,4'-dihydroxy-3,3'-diphenyldiphenyl sulfoxide, 4,4'-dihydroxy-3,3'-diphenyldiphenyl sulfide, 1,3-bis{2-(4-hydroxyphenyl)propyl}benzene, 1,4-bis{2-(4-hydroxyphenyl)propyl }benzene, 1,4-bis(4-hydroxyphenyl)cyclohexane, 1,3-bis(4-hydroxyphenyl)cyclohexane, 4,8-bis(4-hydroxyphenyl)tricyclo[5.2.1.02,6]decane, 4,4'-(1,3-adamantanediyl)diphenol, and 1,3-bis(4-hydroxyphenyl)-5,7-dimethyladamantane. Among these, 1,1-bis(4-hydroxyphenyl)-1-phenylethane, 2,2-bis(4-hydroxyphenyl)propane, 2,2-bis(4-hydroxy-3-methylphenyl)propane, 1,1-bis(4-hydroxyphenyl)cyclohexane, 1,1-bis(4-hydroxyphenyl)-3,3,5-trimethylcyclohexane, 4,4'-sulfonyldiphenol, 2,2'-dimethyl-4,4'-sulfonyldiphenol, 9,9-bis(4-hydroxy-3-methylphenyl)fluorene, 1,3-bis{2-(4-hydroxyphenyl)propyl}benzene, and 1,4-bis{2-(4-hydroxyphenyl)propyl}benzene are preferable, and 2,2-bis(4-hydroxyphenyl)propane, 1,1-bis(4-hydroxyphenyl)cyclohexane (BPZ), 4,4'-sulfonyldiphenol, and 9,9-bis(4-hydroxy-3-methylphenyl)fluorene are especially preferable. Among these, 2,2-bis(4-hydroxyphenyl)propane,

which has excellent strength and satisfactory durability, is the most preferred. These dihydric phenols may be used independently or in combination of two or more.

As the hydroxyaryl-terminated polydiorganosiloxane represented by the above general formula (4) above, for example, the compounds shown below are preferably used.

[Chem. 5]

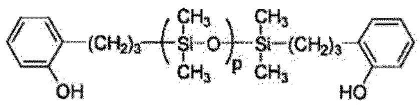
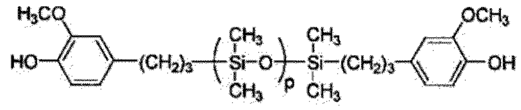
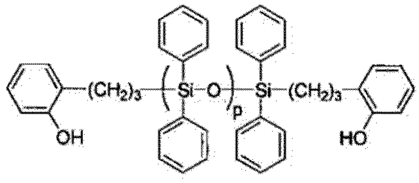
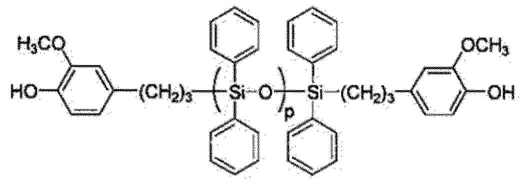
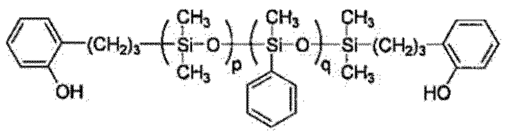
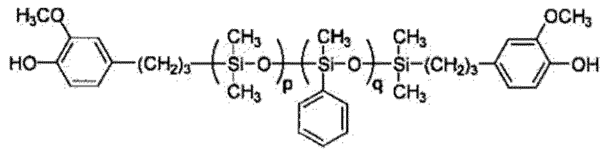
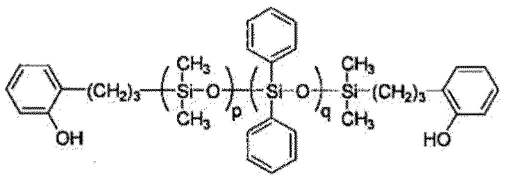
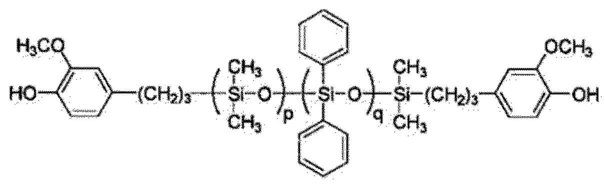

The hydroxyl aryl-terminated polydiorganosiloxane (II) is easily manufactured by subjecting a phenol having an olefinically unsaturated carbon-carbon bond, preferably a vinylphenol, 2-allylphenol, isopropenylphenol, or 2-methoxy-4-allylphenol, to a hydrosilylation reaction at the end of a polysiloxane chain having a predetermined degree of polymerization. Among these, (2-allylphenol)-terminated polydiorganosiloxane and (2-methoxy-4-allylphenol)-terminated polydiorganosiloxane are preferable, and (2-allylphenol)-terminated polydimethylsiloxane and (2-methoxy-4-allylphenol)-terminated polydimethylsiloxane are especially preferable. For the hydroxyaryl-terminated polydiorganosiloxane (II), the molecular weight distribution (Mw/Mn) is preferably 3 or less. To further exhibit excellent low-outgassing property during high-temperature molding and low-temperature impact resistance, the molecular weight distribution (Mw/Mn) is more preferably 2.5 or less, and even more preferably 2 or less. When the upper limit of such a preferred range is exceeded, the amount of outgas generated during high-temperature molding is large, and low-temperature impact resistance may be inferior.

It is suitable that a diorganosiloxane degree of polymerization (p + q) of the hydroxyaryl-terminated polydiorganosiloxane (II) for achieving a high level of impact resistance be 10 to 300. The diorganosiloxane degree of polymerization (p + q) is preferably 10 to 200, more preferably 12 to 150, and even more preferably 14 to 100. Below the lower limit of such a preferred range, impact resistance as a characteristic of the polycarbonate-polydiorganosiloxane copolymer is not effectively exhibited, and when the upper limit of such a preferred range is exceeded, poor appearance occurs.

The polydiorganosiloxane content in terms of the total weight of the polycarbonate-polydiorganosiloxane copolymer used in the component A is preferably 0.1 to 50% by weight. Such polydiorganosiloxane component content is more preferably 0.5 to 30% by weight, and even more preferably 1 to 20% by weight. Above the lower limit of such a preferred range, excellent impact resistance and flame retardancy are likely to be obtained, and below the upper limit of such a preferred range, a stable appearance that is not easily affected by molding conditions is likely to be obtained. The polydiorganosiloxane degree of polymerization and the polydiorganosiloxane content can be calculated from $^{1}H$-NMR measurements.

For the hydroxyaryl-terminated polydiorganosiloxane (II) in the present invention, one type may be used alone, or two or more types may be used.

Other comonomers in addition to the dihydric phenol (I) and the hydroxyaryl-terminated polydiorganosiloxane (II) can also be used in combination in the range of 10% by weight or less relative to the total weight of the copolymer, in a range that does not impede the present invention.

In the present invention, the mixed solution comprising an oligomer having a terminal chloroformate group is

prepared in advance by reacting a dihydric phenol (I) with a carbonate ester-forming compound in a mixed liquid of an organic solvent that is insoluble in water and an alkali aqueous solution.

When forming an oligomer of the dihydric phenol (I), the entire amount of the dihydric phenol (I) used in the method of the present invention may be converted into an oligomer at once, or a portion thereof may be added as a post-addition monomer to an interfacial polycondensation reaction in the latter stage as a reaction raw material. The post-addition monomer is added to quickly advance the polycondensation reaction in the latter stage, and if not necessary, the addition thereof is not required.

The method of the oligomer formation reaction is not particularly limited. However, a method of carrying out the reaction in a solvent in the presence of an acid binder is generally preferred.

The ratio of the carbonate ester-forming compound used needs only to be appropriately adjusted in consideration of the stoichiometric ratio (equivalence) of the reaction. When a gaseous carbonate ester-forming compound such as phosgene is used, a method of blowing the gaseous compound into the reaction system is preferably adopted.

As the acid binder, for example, an alkali metal hydroxide such as sodium hydroxide or potassium hydroxide, an alkali metal carbonate such as sodium carbonate or potassium carbonate, an organic base such as pyridine, or a mixture thereof can be used. The ratio of the acid binder used needs only to be appropriately determined in consideration of the stoichiometric ratio (equivalence) of the reaction, in the same manner described above. Specifically, it is preferable that 2 equivalents or a slightly excess amount of the acid binder relative to the number of moles (generally 1 mol corresponding to 2 equivalents) of the dihydric phenol (I) used to form the oligomer be used.

The solvent needs only to be a solvent inert to various reactions, such as those used in the manufacture of known polycarbonates, alone or as a mixed solvent. Representative examples include hydrocarbon solvents such as xylene, and halogenated hydrocarbon solvents such as methylene chloride and chlorobenzene. Particularly, halogenated hydrocarbon solvents such as methylene chloride are preferably used.

The reaction pressure for oligomer formation is not particularly limited, and may be any of normal pressure, elevated pressure, or reduced pressure, but carrying out the reaction under normal pressure is generally advantageous. The reaction temperature is selected from a range of -20 to 50°C, and since heat is generated during polymerization in many cases, water cooling or ice cooling is desirable. The reaction time depends on other conditions and cannot be generally defined, but the reaction is generally carried out for 0.2 to 10 h. The pH range for the oligomer formation reaction is the same as known interfacial reaction conditions, and the pH is always adjusted to 10 or higher.

In the present invention, after a mixed solution comprising an oligomer of dihydric phenol (I) having terminal chloroformate groups in such a manner, the mixed solution is stirred while adding hydroxyaryl-terminated polydiorganosiloxane (II) represented by general formula (4), which has been highly purified to a molecular weight distribution (Mw/Mn) of 3 or less, to the dihydric phenol (I), and the hydroxyaryl-terminated polydiorganosiloxane (II) and the oligomer are subjected to interfacial polycondensation to obtain a polycarbonate-polydiorganosiloxane polymer.

[Chem. 6]

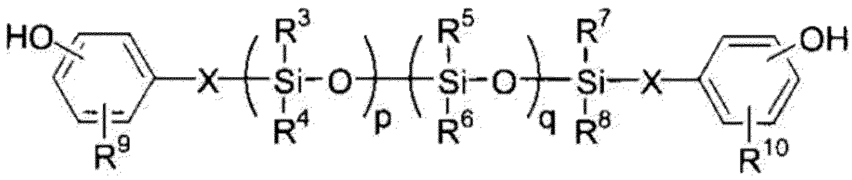

(4)

In the above general formula (4), $R^3$, $R^4$, $R^5$, $R^6$, $R^7$ and $R^8$ are each independently a hydrogen atom, an alkyl group having 1 to 12 carbon atoms, or a substituted or unsubstituted aryl group having 6 to 12 carbon atoms; $R^9$ and $R^{10}$ are each independently a hydrogen atom, a halogen atom, an alkyl group having 1 to 10 carbon atoms, or an alkoxy group having 1 to 10 carbon atoms; p is a natural number; q is 0 or a natural number; and p + q is a natural number of 10 to 300. X is a divalent aliphatic group having 2 to 8 carbon atoms.

When carrying out the interfacial polycondensation reaction, an acid binder may be appropriately added in consideration of the stoichiometric ratio (equivalence) of the reaction. As the acid binder, for example, an alkali metal hydroxide such as sodium hydroxide or potassium hydroxide, an alkali metal carbonate such as sodium carbonate or potassium carbonate, an organic base such as pyridine, or a mixture thereof is used. Specifically, it is preferable that 2 equivalents or an excess amount therefrom of alkali relative to the number of moles (generally 1 mol corresponding to 2 equivalents) of the hydroxyaryl-terminated polydiorganosiloxane (II) to be used, or when a portion of the dihydric phenol (I) as described above is added to this reaction stage as a post-addition monomer, the total number of moles of the post-addition dihydric phenol (I) and the hydroxyaryl-terminated polydiorganosiloxane (II), be used.

The polycondensation by the interfacial polycondensation reaction between the oligomer of the dihydric phenol (I) and the hydroxyaryl-terminated polydiorganosiloxane (II) is carried out by vigorous stirring of the above mixed liquid.

In such a polymerization reaction, a terminating agent or a molecular weight modifier is generally used. Examples of the terminating agent include compounds having a monohydric phenolic hydroxyl group, and in addition to ordinary phenols, p-tert-butylphenol, p-cumylphenol, and tribromophenol, are exemplified by long chain alkylphenols, aliphatic carboxylic acid chlorides, aliphatic carboxylic acids, hydroxybenzoic acid alkyl esters, hydroxyphenyl alkyl acid esters, and alkyl ether phenols. The use amount thereof, relative to 100 mol of the entirety of dihydric phenol-based compounds used, is in the range of 100 to 0.5 mol, and preferably 50 to 2 mol. Two or more compounds can naturally be used in combination.

To accelerate the polycondensation reaction, a catalyst such as a tertiary amine, such as triethylamine, or a quaternary ammonium salt may be added.

The reaction time of such a polymerization reaction is preferably 30 min or more, and more preferably 50 min or more. A small amount of an antioxidant such as sodium sulfite or hydrosulfide may be added as desired.

Branching agents can be used in combination with the above dihydric phenol-based compounds to form branched polycarbonate-polydiorganosiloxanes. Examples of trifunctional or higher polyfunctional aromatic compounds used in such branched polycarbonate-polydiorganosiloxane copolymer resins include phloroglucine, phloroglucide, trisphenols such as 4,6-dimethyl-2,4,6-tris(4-hydroxydiphenyl)heptene-2, 2,4,6-trimethyl-2,4,6-tris(4-hydroxyphenyl) heptane, 1,3,5-tris(4-hydroxyphenyl)benzene, 1,1,1-tris(4-hydroxyphenyl)ethane, 1,1,1-tris(3,5-dimethyl-4-hydroxyphenyl)ethane, 2,6-bis(2-hydroxy-5-methylbenzyl)-4-methylphenol, and 4-{4-[1,1-bis(4-hydroxyphenyl)ethyl]benzene}-α,α-dimethylbenzylphenol; tetra(4-hydroxyphenyl)methane, bis(2,4-dihydroxyphenyl)ketone, 1,4-bis(4,4-dihydroxytriphenylmethyl)benzene; trimellitic acid, pyromellitic acid, benzophenonetetracarboxylic acid, and acid chlorides thereof. Among these, 1,1,1-tris(4-hydroxyphenyl)ethane and 1,1,1-tris(3,5-dimethyl-4-hydroxyphenyl)ethane are preferable, and 1,1,1-tris(4-hydroxyphenyl)ethane is particularly preferable. The ratio of the polyfunctional compound in the branched polycarbonate-polydiorganosiloxane copolymer resin is preferably 0.001 to 1 mol%, more preferably 0.005 to 0.9 mol%, even more preferably 0.01 to 0.8 mol%, and particularly preferably 0.05 to 0.4 mol% in the entire amount of the aromatic polycarbonate-polydiorganosiloxane copolymer resin. The amount of such branched structures can be calculated from $^1$H-NMR measurements.

The reaction pressure can be any of reduced pressure, normal pressure, or elevated pressure, but generally, the reaction can be carried out preferably under normal pressure or the reaction system's own pressure. The reaction temperature is selected from a range of -20 to 50°C, and since heat is generated during polymerization in many cases, water cooling or ice cooling is desirable. The reaction time varies due to other conditions such as reaction temperature and cannot be generally defined, but the reaction is generally carried out for 0.5 to 10 h.

In some cases, the obtained polycarbonate-polydiorganosiloxane copolymer resin can be appropriately subjected to a physical treatment (such as mixing or fractionation) and/or a chemical treatment (such as a polymer reaction, a crosslinking treatment, or a partial decomposition treatment) to obtain a polycarbonate-polydiorganosiloxane copolymer resin having a desired reduced viscosity [$\eta$SP/c].

The resulting reaction product (crude product) can be subjected to various post-treatments such as known separation and purification methods to recover a polycarbonate-polydiorganosiloxane copolymer resin having a desired purity (degree of purification). The average size of the polydiorganosiloxane domains in a polycarbonate-polydiorganosiloxane copolymer resin molded article is preferably in the range of 1 to 40 nm. Such an average size is more preferably 1 to 30 nm, and even more preferably 5 to 25 nm. Below the lower limit of such a preferred range, impact resistance and flame retardancy are not sufficiently exhibited. Above the upper limit of such a preferred range, impact resistance may not be stably exhibited.

The average domain size and normalized dispersion of the polydiorganosiloxane domains in a polycarbonate-polydiorganosiloxane copolymer resin molded article of the present invention are evaluated by small-angle X-ray scattering (SAXS) method. The small-angle X-ray scattering method is a method for measuring diffuse scattering and diffraction occurring in small-angle regions of scattering angle ($2\theta$) < 10°. In the small-angle X-ray scattering method, if there are regions with different electron densities of about 1 to 100 nm in a substance, the diffuse scattering of X-rays is measured due to the difference in electron density. The particle size of the measurement object is determined based on this scattering angle and scattering intensity. In the case of a polycarbonate-polydiorganosiloxane copolymer resin that has an aggregate structure wherein polydiorganosiloxane domains are dispersed in a polycarbonate polymer matrix, diffuse scattering of X-rays occurs due to the difference in electron density between the polycarbonate matrix and the polydiorganosiloxane domains. The scattering intensity I at each scattering angle ($2\theta$) in the range of scattering angles ($2\theta$) of less than 10° is measured to measure the small-angle X-ray scattering profile. Assuming that the polydiorganosiloxane domains are spherical domains and variations are present in particle size distribution, a simulation is carried out using commercially available analysis software from an assumed particle size and an assumed particle size distribution model to determine the average size and particle size distribution (normalized dispersion) of the polydiorganosiloxane domains. Average size and particle size distribution of polydiorganosiloxane domains dispersed in a polycarbonate polymer matrix, which cannot be accurately measured by observation with a transmission electron microscope, can be measured precisely, easily, and reproducibly according to the small-angle X-ray scattering method. The average domain

size means a numerical average of the individual domain sizes. The normalized dispersion means a parameter obtained by normalizing the spread of particle size distribution by the average size, and specifically, is a value obtained by normalizing the dispersion of the polydiorganosiloxane domain sizes by the average domain size, expressed by formula (1) below.

[Math. 1]

$$\text{NORMALIZED DISPERSION } (\%) = \delta / D_{av} \quad \cdots \quad (1)$$

In the above formula (1), $\delta$ is a standard deviation of the polydiorganosiloxane domain size, and $D_{av}$ is the average domain size.

The terms "average domain size" and "normalized dispersion" used in association with the present invention refer to measurement values obtained by measuring a 1.0-mm thick portion of a three-tiered plate prepared by the method described in Examples, by the small-angle X-ray scattering method. Analysis is carried out with an isolated particle model wherein interparticle interactions (interparticle interference) are not taken into consideration.

(Component B: glass fiber)

Examples of the glass fiber used as component B in the present invention preferably include glass fibers having a round cross section, flat cross-sectional glass fibers in which the average value of the longer size of the fiber longitudinal cross section is 5 to 20 μm and the average value of the ratio between the longer size and the shorter size (longer size/shorter size) is 1.5 to 8, and glass-milled fibers, and, in particular, glass fibers having a round cross section, and flat cross-sectional glass fibers in which the average value of the longer size of the fiber longitudinal cross section is 5 to 20 μm and the average value of the ratio between the longer size and the shorter size (longer size/shorter size) is 1.5 to 8 are preferred in terms of tensile strength.

The glass composition of the glass fiber is not particularly limited, and various glass compositions typified by A-glass, C-glass, and E-glass are applied. Such a glass fiber may contain components such as $TiO_2$, $SO_3$, and $P_2O_5$ as needed. Among these, E-glass (alkali-free glass) is more preferred.

Such a glass fiber contains at least one compound selected from the group consisting of a surface treatment agent and a sizing agent, and a gas component obtained by heating the glass fiber at 600°C for 12 seconds contains carboxylic anhydride, or a gas component obtained by heating the glass fiber at 400°C for 12 seconds contains a compound represented by general formula (1) below.

[Chem. 7]

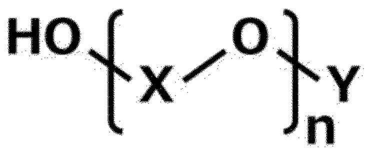

(1)

In the above general formula (1), n is an integer of 1 to 10, X each independently represents an alkylene group having 1 to 5 carbon atoms, and Y each independently represents an alkyl group having 1 to 5 carbon atoms.

Examples of the carboxylic anhydride include maleic anhydride, itaconic anhydride, succinic anhydride, phthalic anhydride, 1,2,3,6-tetrahydrophthalic anhydride, glutaric anhydride, dodecenyl succinic anhydride, and chlorendic anhydride.

X in the above general formula (1) is preferably an alkylene group having 3 carbon atoms.

Examples of the compound represented by general formula (1) include 4,8,12,16-tetraoxaeicosan-1-ol, 2,5,8,11-tetraoxatetradecan-13-ol, 4,7,10-trimethyl, 2-propanol,1-(2-(2-methoxy-1-methylethoxy)-1-methylethoxy), and 4,8,12,16-tetraoxaeicosan-1-ol is preferred.

It is considered that the carboxylic anhydride contained in such a gas component obtained by heating at 600°C for 12 seconds or the compound represented by general formula (1) contained in such a gas component obtained by heating at 400°C for 12 seconds originates from a surface treatment agent and a sizing agent contained in the glass fiber and is derived from an acid component or an acid anhydride component included in one portion of the structure of the surface

treatment agent and the sizing agent.

The component from which the carboxylic anhydride or the compound represented by general formula (1) is an acid copolymerized product, and has a carboxylic acid group or a carboxylic anhydride group. It is considered that such a functional group and a terminal functional group of the phenoxy resin and/or the epoxy resin as the component C are reacted to form a strong covalent bond with the glass fiber and thus adhesion between the component B and the component C is improved. When the component C is particularly a bisphenol A type component, the affinity thereof with the aromatic polycarbonate-based resin as the component A is high. As a result, adhesion between the component A and the component B is improved via the component C, and thus a glass fiber having such properties can be used to significantly improve wet heat resistance and chemical resistance of the polycarbonate resin composition.

The measurement method of the gas component follows a method described in Examples below. Herein, in the case where equipment described in Examples is hardly available due to discontinuation or the like, such measurement can be made by any other equipment having the same performance.

The content of the component B, relative to 100 parts by weight of the component A, is 20 to 130 parts by weight, preferably 30 to 120 parts by weight, and more preferably 40 to 120 parts by weight. In the case where the content of the component B is less than 20 parts by weight, improvement of tensile strength is insufficient. In the case where the content is greater than 130 parts by weight, processability is deteriorated.

(Component C: phenoxy resin and/or epoxy resin)

Examples of the phenoxy resin used as component C in the present invention include phenoxy resins represented by general formula (5) below.

[Chem. 8]

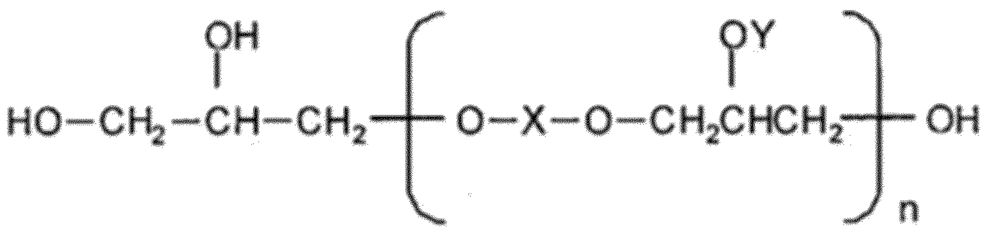

(5)

In the formula, X is at least one group selected from the group consisting of groups represented by general formula (6) below, Y is a hydrogen atom, or a residue of a compound reactive with a hydroxyl group, and n is an integer of 0 or more.

[Chem. 9]

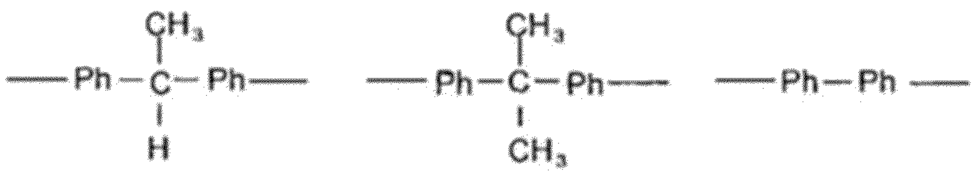

(6)

In the formula, Ph represents a phenyl group.

Examples of the compound reactive with a hydroxyl group in the above general formula (5) can include esters, carbonates, compounds having an epoxy group or the like, carboxylic anhydride, acid halides, and compounds having an isocyanate group or the like, and such esters are preferably particularly intermolecular esters and examples thereof include caprolactone. In the phenoxy resin represented by the above general formula (4), the compound in which Y is a hydrogen atom can be easily manufactured from a divalent phenol and epichlorohydrin. The compound in which Y is a residue of a compound reactive with a hydroxyl group can be easily manufactured by mixing the phenoxy resin manufactured from a divalent phenol and epichlorohydrin with the compound reactive with a hydroxyl group under heating.

Examples of the epoxy resin used as component C in the present invention include epoxy resins represented by the following general formula (7).

[Chem. 10]

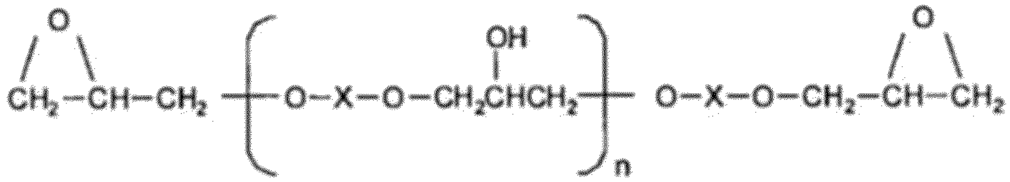

(7)

In the formula, X and n have the same meanings as those of formula (5).

The epoxy resin represented by the above general formula (7) can be easily manufactured from a divalent phenol and epichlorohydrin. As the dihydric phenol, a bisphenol A-type epoxy resin such as 2,2-bis(4-hydroxyphenyl)propane [bisphenol A], 1,1-bis(4-hydroxyphenyl)ethane, 4,4'-dihydroxybiphenyl, or the like is used.

Among these phenoxy resins and epoxy resins, particularly preferred modes include bisphenol A-type phenoxy resins and/or bisphenol A-type epoxy resins.

As the phenoxy resin and the epoxy resin, commercial products can also be used. Examples of commercial products of the phenoxy resin (bisphenol A type) include PKHB (manufactured by Gabriel Phenoxies, Mw = 32,000), PKHH (manufactured by Gabriel Phenoxies, Mw = 52,000), and PKFE (manufactured by Gabriel Phenoxies, Mw = 60,000). Examples of commercial products of the epoxy resin (bisphenol A type) include jER1256 (manufactured by Mitsubishi Chemical Corporation, Mw = 50,000).

The weight average molecular weight of each of the phenoxy resin and the epoxy resin is not particularly limited, but is preferably 5,000 to 100,000, more preferably 8,000 to 80,000, and even more preferably 10,000 to 50,000. When the weight average molecular weight is in the range of 5,000 to 100,000, in particular, mechanical properties may be satisfactory.

The content of the component C, relative to 100 parts by weight of the component A, is 1 to 10 parts by weight, preferably 1 to 7 parts by weight, and more preferably 2 to 6 parts by weight. In the case where the content is out of the above range and is too low, tensile strength, wet heat resistance and chemical resistance are deteriorated. In the case where the content exceeds the range, processability is deteriorated.

(Component D: phosphorus-based stabilizer)

The polycarbonate resin composition of the present invention can contain a phosphorus-based stabilizer as the component D. The phosphorus-based stabilizer improves thermal stability during manufacturing or during molding, and improves mechanical properties, hue, and molding stability. Examples of the phosphorus-based stabilizer include phosphorous acid, phosphoric acid, phosphonous acid, phosphonic acid and esters thereof, and tertiary phosphine. Specific examples of phosphite compounds include triphenyl phosphite, tris(nonylphenyl) phosphite, tridecyl phosphite, trioctyl phosphite, trioctadecyl phosphite, didecyl monophenyl phosphite, dioctyl monophenyl phosphite, diisopropyl monophenyl phosphite, monobutyl diphenyl phosphite, monodecyl diphenyl phosphite, monooctyl diphenyl phosphite, 2,2-methylenebis(4,6-di-tert-butylphenyl)octyl phosphite, tris(diethylphenyl) phosphite, tris(di-iso-propylphenyl) phosphite, tris(di-n-butylphenyl) phosphite, tris(2,4-di-tert-butylphenyl) phosphite, tris(2,6-di-tert-butylphenyl) phosphite, distearyl pentaerythritol diphosphite, bis(2,4-di-tert-butylphenyl)pentaerythritol diphosphite, bis(2,6-di-tert-butyl-4-methylphenyl)pentaerythritol diphosphite, bis(2,6-di-tert-butyl-4-ethylphenyl)pentaerythritol diphosphite, phenyl bisphenol A pentaerythritol diphosphite, bis(nonylphenyl)pentaerythritol diphosphite, and dicyclohexyl pentaerythritol diphosphite. As even another phosphite compound, one being reactive with dihydric phenols and having a cyclic structure can also be used. Examples can include 2,2'-methylenebis(4,6-di-tert-butylphenyl)(2,4-di-tert-butylphenyl) phosphite, 2,2'-methylenebis(4,6-di-tert-butylphenyl)(2-tert-butyl-4-methylphenyl)phosphite, 2,2'-methylenebis(4-methyl-6-tert-butylphenyl)(2-tert-butyl-4-methylphenyl)phosphite, and 2,2'-ethylidenebis(4-methyl-6-tert-butylphenyl)(2-tert-butyl-4-methylphenyl) phosphite. Examples of the phosphate compound can include tributyl phosphate, trimethyl phosphate, triethyl phosphonoacetate, tricresyl phosphate, triphenyl phosphate, trichlorophenyl phosphate, triethyl phosphate, diphenyl cresyl phosphate, diphenyl monooxoxenyl phosphate, tributoxyethyl phosphate, dibutyl phosphate, dioctyl phosphate, and diisopropyl phosphate, and triphenyl phosphate, trimethyl phosphate, triethyl phosphonoacetate are preferred.

Examples of phosphonite compounds include tetrakis(2,4-di-tert-butylphenyl)-4,4'-biphenylene diphosphonite, tetrakis(2,4-di-tert-butylphenyl)-4,3'-biphenylene diphosphonite, tetrakis(2,4-di-tert-butylphenyl)-3,3'-biphenylene diphosphonite, tetrakis(2,6-di-tert-butylphenyl)-4,4'-biphenylene diphosphonite, tetrakis(2,6-di-tert-butylphenyl)-4,3'-biphenylene diphosphonite, tetrakis(2,6-di-tert-butylphenyl)-3,3'-biphenylene diphosphonite, bis(2,4-di-tert-butylphenyl)-4-phenyl-phenyl phosphonite, bis(2,4-di-tert-butylphenyl)-3-phenyl-phenyl phosphonite, bis(2,6-di-n-butylphenyl)-3-phenyl-phenyl phosphonite, bis(2,6-di-tert-butylphenyl)-4-phenyl-phenyl phosphonite, and bis(2,6-di-tert-butylphenyl)-3-phenyl-phenyl phosphonite, tetrakis(di-tert-butylphenyl)-biphenylene diphosphonate and bis(di-tert-butylphenyl)-phenyl-phenyl phosphonite are preferred, and tetrakis(2,4-di-tert-butylphenyl)-biphenylene diphosphonate and bis(2,4-di-tert-butylphenyl)-phenyl-phenyl phosphonite are more preferred. Such a phosphonite compound can be used in combination with the above phosphite compound having an aryl group substituted with two or more alkyl groups. Examples of phosphonate compounds include dimethyl benzenephosphonate, diethyl benzenephosphonate, and dipropyl benzenephosphonate. Examples of the tertiary phosphine include triethyl phosphine, tripropyl phosphine, tributyl phosphine, trioctyl phosphine, triamyl phosphine, dimethyl phenyl phosphine, dibutyl phenyl phosphine, diphenyl methyl phosphine, diphenyl octyl phosphine, triphenyl phosphine, tri-p-tolyl phosphine, trinaphthyl phosphine, and diphenyl benzyl phosphine. A particularly preferred tertiary phosphine is triphenyl phosphine. For the phosphorus-based stabilizer, one type can be used alone, or two or more types can be mixed and used. Among the above phosphorus-based stabilizers, an alkyl phosphate compound typified by triethyl phosphonoacetate is preferably blended. Combination use of such an alkyl phosphate compound and the phosphite compound and/or the phosphonite compound is also a preferred mode.

The content of the component D, relative to 100 parts by weight of the component A, is preferably 0.01 to 3 parts by weight, more preferably 0.01 to 1 part by weight, and even more preferably 0.02 to 0.1 parts by weight. In the case where the content of the component D is greater than 3 parts by weight, wet heat resistance may be deteriorated. In the case where the content of the component D is less than 0.01 parts by weight, tensile strength may not be improved.

(Component E: flame retardant)

A flame retardant can be blended in the polycarbonate resin composition of the present invention. Examples of the flame retardant include (i) organic metal salt-based flame retardants (for example, alkali (earth) metal organic sulfonates, metal organic borate-based flame retardants, and metal organic stannate-based flame retardants), (ii) organophosphorus-based flame retardants (for example, organic group-containing monophosphate compounds, phosphate oligomer compounds, phosphonate oligomer compounds, phosphonitrile oligomer compounds, and phosphonic amide compounds), (iii) silicone-based flame retardants composed of silicone compounds, and (iv) halogen-based flame retardants, and among these, organic metal salt-based flame retardants and halogen-based flame retardants are preferred. These can be used alone or as a composite of two or more. The content of the component E, relative to 100 parts by weight of the component A, is preferably 0.01 to 35 parts by weight.

(i) Organic metal salt-based flame retardant

The organic metal salt compound is preferably an alkali (earth) metal salt of an organic acid, and preferably an alkali (earth) metal organic sulfonate, in which the number of carbon atoms is 1 to 50, and preferably 1 to 40. The alkali (earth) metal organic sulfonate includes a metal salt of fluorine-substituted alkyl sulfonic acid, such as a metal salt of perfluoroalkylsulfonic acid having 1 to 10 carbon atoms, preferably 2 to 8 carbon atoms, and an alkali metal or an alkaline earth metal, and a metal salt of aromatic sulfonic acid having 7 to 50 carbon atoms, preferably 7 to 40 carbon atoms, and an alkali metal or an alkaline earth metal. Examples of the alkali metal constituting the metal salt include lithium, sodium, potassium, rubidium, and cesium, and examples of the alkaline earth metal include beryllium, magnesium, calcium, strontium, and barium. The alkali metal is more preferred. Among these alkali metals, rubidium and cesium larger in ion radius is preferred in the case of a high requirement for transparency, but these are not versatile and purification thereof is also difficult, and therefore may be consequently disadvantageous in terms of cost. In this regard, metals smaller in ion radius, such as lithium and sodium, may be disadvantageous contrarily in terms of flame retardancy. While the alkali metal in the alkali metal sulfonate can be selectively used in consideration of these, potassium sulfonate excellent in balance between properties at any point is most preferred. Such a potassium salt and an alkali metal sulfonate made of other alkali metal can also be used in combination.

Specific examples of the alkali metal perfluoroalkylsulfonate include potassium trifluoromethanesulfonate, potassium perfluorobutanesulfonate, potassium perfluorohexanesulfonate, potassium perfluorooctanesulfonate, sodium pentafluoroethanesulfonate, sodium perfluorobutanesulfonate, sodium perfluorooctanesulfonate, lithium trifluoromethanesulfonate, lithium perfluorobutanesulfonate, lithium perfluoroheptanesulfonate, cesium trifluoromethanesulfonate, cesium perfluorobutanesulfonate, cesium perfluorooctanesulfonate, cesium perfluorohexanesulfonate, rubidium perfluorobutanesulfonate, and rubidium perfluorohexanesulfonate, and these can be used alone or in combination of two or more. The number of carbon atoms in the perfluoroalkyl group is preferably in the range of 1 to 18, more preferably in the range of 1 to 10, and even more preferably in the range of 1 to 8.

Among these, in particular, potassium perfluorobutanesulfonate is preferred. Fluoride ions ($F^-$) are usually more than slightly incorporated into alkali (earth) metal perfluoroalkylsulfonates composed of alkali metals. The presence of such fluoride ions can cause deterioration in flame retardancy, and therefore are preferably not included as much as possible. The proportion of such fluoride ions can be measured by an ion chromatography method. The content of such fluoride ions is preferably 100 ppm or less, even more preferably 40 ppm or less, and particularly preferably 10 ppm or less. The content is preferably 0.2 ppm or more in terms of manufacturing efficiency. The alkali (earth) metal perfluoroalkylsulfonate in which the amount of such fluoride ions is reduced can be manufactured by using a known manufacturing method as the manufacturing method, and using, for example, a method in which the amount of fluoride ions contained in a raw material during manufacturing of a fluorine-containing organic metal salt is reduced, a method in which hydrogen fluoride or the like obtained by reaction is removed by a gas generated during reaction, or heating, or a method in which the amount of fluoride ions is reduced by a purification method such as recrystallization and reprecipitation in manufacturing of a fluorine-containing organic metal salt. In particular, the organic metal salt-based flame retardant is relatively easily dissolved in water, and thus is preferably manufactured by a process in which dissolution and washing are performed at a temperature higher than ordinary temperature by use of ion-exchanged water, in particular, water satisfying an electric resistivity value of 18 MΩ·cm or greater, namely, an electric conductivity of about 0.55 μS/cm or less, and thereafter cooling and recrystallization are performed.

Specific examples of the alkali (earth) metal aromatic sulfonate include disodium diphenylsulfide-4,4'-disulfonate, dipotassium diphenylsulfide-4,4'-disulfonate, potassium 5-sulfoisophthalate, sodium 5-sulfoisophthalate, polysodium polyethylene terephthalate polysulfonate, calcium 1-methoxynaphthalene-4-sulfonate, disodium 4-dodecyl phenyl ether disulfonate, polysodium poly(2,6-dimethylphenyleneoxide)polysulfonate, polysodium poly(1,3-phenyleneoxide) polysulfonate, polysodium poly(1,4-phenyleneoxide)polysulfonate, polypotassium poly(2,6-diphenylphenyleneoxide) polysulfonate, lithium poly(2-fluoro-6-butylphenyleneoxide)polysulfonate, potassium sulfonate of benzenesulfonate, sodium benzenesulfonate, strontium benzenesulfonate, magnesium benzenesulfonate, dipotassium p-benzenedisulfonate, dipotassium naphthalene-2,6-disulfonate, calcium biphenyl-3,3'-disulfonate, sodium diphenylsulfone-3-sulfonate, potassium diphenylsulfone-3-sulfonate, dipotassium diphenylsulfone-3,3'-disulfonate, dipotassium diphenylsulfone-3,4'-disulfonate, sodium α,α,α-trifluoroacetophenone-4-sulfonate, dipotassium benzophenone-3,3'-disulfonate, disodium thiophene-2,5-disulfonate, dipotassium thiophene-2,5-disulfonate, calcium thiophene-2,5-disulfonate, sodium benzothiophenesulfonate, potassium diphenylsulfoxide-4-sulfonate, formalin condensates of sodium naphthalenesulfonate, and formalin condensates of sodium anthracene. Among these alkali (earth) metal aromatic sulfonates, in particular, potassium salts are preferred. Among these alkali (earth) metal aromatic sulfonates, potassium diphenylsulfone-3-sulfonate, and dipotassium diphenylsulfone-3,3'-disulfonate are preferred, and a mixture thereof is particularly preferred (the weight ratio between the former and the latter is 15/85 to 30/70).

Examples of an organic metal salt other than alkali (earth) metal sulfonate preferably include alkali (earth) metal salts of sulfate esters and alkali (earth) metal salts of aromatic sulfonamides. Examples of such alkali (earth) metal salts of sulfate esters can particularly include alkali (earth) metal salts of sulfate esters of monohydric and/or polyhydric alcohols, and examples of such sulfate esters of monohydric and/or polyhydric alcohols can include methyl sulfate ester, ethyl sulfate ester, lauryl sulfate ester, hexadecyl sulfate ester, sulfate ester of polyoxyethylene alkyl phenyl ether, mono, di, tri, and tetrasulfate esters of pentaerythritol, sulfate esters of monoglyceride laurate, sulfate esters of monoglyceride palmitate, and sulfate esters of monoglyceride stearate. Examples of these alkali (earth) metal salts of sulfate esters preferably include alkali (earth) metal salts of lauryl sulfate ester. Examples of the alkali (earth) metal salts of aromatic sulfonamides include alkali (earth) metal salts of saccharin, N-(p-tolylsulfonyl)-p-toluenesulfonimide, N-(N'-benzylaminocarbonyl)sulfanylimide, and N-(phenylcarboxyl)sulfanylimide. The content of the organic metal salt-based flame retardant, relative to 100 parts by weight of the component A, is preferably 0.01 to 1 part by weight, more preferably 0.01 to 0.5 parts by weight, and even more preferably 0.01 to 0.3 parts by weight.

(ii) Organophosphorus-based flame retardant

As the organophosphorus-based flame retardant, an aryl phosphate compound or a phosphazene compound is preferably used. These organophosphorus-based flame retardants have a plasticization effect, and thus are advantageous in that processability can be increased. For such an aryl phosphate compound, various phosphate compounds conventionally known as flame retardants can be used. More preferably, one or more phosphate compounds represented by the general formula (8) below can be included.

[Chem. 11]

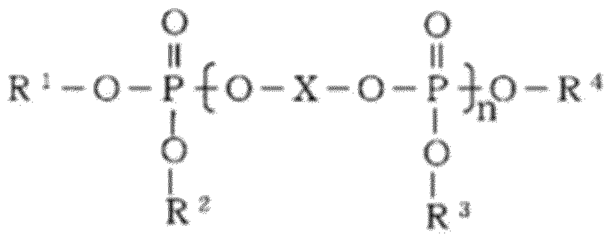

(8)

In formula (8), X is a dihydric phenol residue derived from a dihydroxy compound selected from the group consisting of

hydroquinone, resorcinol, bis(4-hydroxydipenyl)methane, bisphenol A, dihydroxydiphenyl, dihydroxynaphthalene, bis(4-hydroxyphenyl)sulfone, bis(4-hydroxyphenyl)ketone, and bis(4-hydroxyphenyl)sulfide; n is an integer of 0 to 5 or, in the case of a mixture of phosphate esters having different n numbers, an average value thereof; $R^1$, $R^2$, $R^3$, and $R^4$ are each independently a monohydric phenol residue derived from an aryl group selected from the group consisting of phenol, cresol, xylenol, isopropylphenol, butylphenol, and p-cumylphenol.

Phosphate compounds of the above general formula (8) may be mixtures of compounds having different n numbers. In the case of such a mixture, the average n number is in the range of preferably 0.5 to 1.5, more preferably 0.8 to 1.2, even more preferably 0.95 to 1.15, and particularly preferably 1 to 1.14.

Preferred specific examples of the dihydric phenol from which X in the above general formula (8) is derived include resorcinol, bisphenol A, and dihydroxydiphenyl. Among these, resorcinol and bisphenol A are preferable.

Preferred specific examples of the monohydric phenol from which $R^1$, $R^2$, $R^3$, and $R^4$ in the above general formula (8) are derived include phenol, cresol, xylenol, and 2,6-dimethylphenol. Among these, phenol and 2,6-dimethylphenol are preferable.

As specific examples of phosphate compounds of the above general formula (8), monophosphate compounds such as triphenyl phosphate and tri(2,6-xylyl)phosphate; phosphate oligomers mainly composed of resorcinol bis(di(2,6-xylyl)phosphate), phosphate oligomers mainly composed of 4,4-dihydroxydiphneyl bis(phenyl phosphate), and phosphate ester oligomers mainly composed of bisphenol A bis(diphenyl phosphate) are preferred. Among these, phosphate oligomers mainly composed of resorcinol bis(di(2,6-xylyl)phosphate), phosphate oligomers mainly composed of 4,4-dihydroxydiphneyl bis(phenyl phosphate), and phosphate ester oligomers mainly composed of bisphenol A bis(diphenyl phosphate) are preferable.

Preferred examples of the phosphorus-based flame retardant also include phosphazene compounds. As the phosphazene compounds, cyclic phenoxyphosphazenes represented by general formula (9) below are preferable.

[Chem. 12]

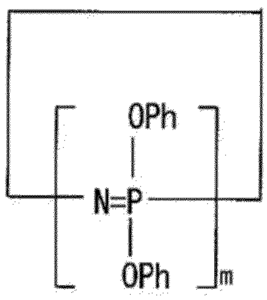

(9)

In the formula, m indicates an integer of 3 to 25. Ph indicates a phenyl group.

Representative examples of commercially available cyclic phenoxyphosphazene include "FP-110" manufactured by Fushimi Pharmaceutical Co., Ltd.

The content of the organophosphorus-based flame retardant, relative to 100 parts by weight of the component A, is preferably 1 to 35 parts by weight, more preferably 2 to 30 parts by weight, and even more preferably 5 to 20 parts by weight. When the content of the organophosphorus-based flame retardant is less than 1 part by weight, the effect of flame retardancy is hardly obtained, and when the content is greater than 35 parts by weight, strand breakage, surging, and/or the like may occur during kneading extrusion, causing the problem of deterioration in productivity.

(iii) Silicone-based flame retardant

The silicone compound used as the silicone-based flame retardant improves flame retardancy by chemical reaction during combustion. As the compound, various compounds which have been conventionally proposed as flame retardants for aromatic polycarbonate resins can be used. It is considered that the silicone compound imparts a high effect of flame retardancy particularly in the case of use of a polycarbonate resin by binding itself or with a resin-derived component during combustion and thus formation of a structure or reduction reaction during formation of the structure.

It is accordingly preferable to include a group having high activity in such reaction, and it is more specifically preferable to include a predetermined amount of at least one group selected from an alkoxy group and hydrogen (namely, Si-H group). The content ratio of such a group (alkoxy group or Si-H group) is preferably in the range of 0.1 to 1.2 mol/100 g, more preferably in the range of 0.12 to 1 mol/100 g, and even more preferably in the range of 0.15 to 0.6 mol/100 g. The ratio is determined by measuring the amount of hydrogen or alcohol generated per unit weight of silicone compound by an alkali decomposition method. The alkoxy group is preferably an alkoxy group having 1 to 4 carbon atoms. A methoxy group is

particularly preferred.

The structure of the silicone compound is generally formed by any combination of the four siloxane units indicated below. Specifically, the units are M units: monofunctional siloxane units such as $(CH_3)_3SiO_{1/2}$, $H(CH_3)_2SiO_{1/2}$, $H_2(CH_3)SiO_{1/2}$, $(CH_3)_2(CH_2=CH)SiO_{1/2}$, $(CH_3)_2(C6H_5)SiO_{1/2}$, and $(CH_3)(C6H_5)(CH_2=CH)SiO_{1/2}$; D units: bifunctional siloxane units such as $(CH_3)_2SiO$, $H(CH_3)SiO$, $H_2SiO$, $H(C_6H_5)SiO$, $(CH_3)(CH_2=CH)SiO$, and $(C_6H_5)_2SiO$; T units: trifunctional siloxane units such as $(CH_3)SiO_{3/2}$, $(C_3H_7)SiO_{3/2}$, $HSiO_{3/2}$, $(CH_2=CH)SiO_{3/2}$, and $(C_6H_5)SiO_{3/2}$; and Q unit: tetrafunctional siloxane units represented by $SiO_2$.

Specific examples of the structure of the silicone compound used in the silicone-based flame retardant include, as rational formulas, Dn, Tp, MmDn, MmTp, MmQq, MmDnTp, MmDnQq, MmTpQq, MmDnTpQq, DnTp, DnQq, and DnTpQq. Among these, preferable structures of the silicone compound are MmDn, MmTp, MmDnTp, and MmDnQq, and more preferable structures are MmDn and MmDnTp.

The coefficients m, n, p, and q in the rational formulas are integers of 1 or greater that represent degree of polymerization of each siloxane unit, and the sum of the coefficients in each rational formula is the average degree of polymerization of the silicone compound. The average degree of polymerization is preferably in the range of 3 to 150, more preferably in the range of 3 to 80, even more preferably in the range of 3 to 60, and particularly preferably in the range of 4 to 40. The more the average degree of polymerization falls within the preferred range, the more excellent the flame retardancy. Further, as described below, silicone compounds comprising a predetermined number of aromatic groups also have excellent transparency and hue. As a result, satisfactory reflected light can be obtained. When any of m, n, p, and q is a numerical value of 2 or greater, the siloxane unit with the coefficient can be two or more types of siloxane units having different hydrogen atoms or organic residues bonded thereto.

The silicone compound may be linear or may have a branched structure. It is preferable that the organic residue bonded to the silicon atom be an organic residue having 1 to 30 carbon atoms, more preferably 1 to 20 carbon atoms. Specific examples of such an organic residue include alkyl groups such as methyl group, ethyl group, propyl group, butyl group, hexyl group, and decyl group; cycloalkyl groups such as cyclohexyl; aryl groups such as phenyl group; and aralkyl groups such as tolyl group. Alkyl groups having 1 to 8 carbon atoms, alkenyl groups, and aryl groups are more preferable. For alkyl groups, alkyl groups having 1 to 4 carbon atoms, such as methyl group, ethyl group, and propyl group are particularly preferable. The silicone compound used as the silicone-based flame retardant preferably contains an aryl group. Silane compounds and siloxane compounds used as organic surface treatment agents for titanium dioxide pigments are clearly distinguished from the preferred embodiments of the silicone-based flame retardant, in that those containing no aryl group can achieve a preferable effect. The silicone compound used as the silicone-based flame retardant may contain a reaction group other than the Si-H group and the alkoxy group, and examples of the reaction group include amino groups, carboxyl groups, epoxy groups, vinyl groups, mercapto groups, and methacryloxy groups.

The content of the silicone-based flame retardant, relative to 100 parts by weight of the component A, is preferably 0.01 to 20 parts by weight, more preferably 0.5 to 10 parts by weight, and even more preferably 1 to 5 parts by weight.

(iv) Halogen-based flame retardant

As the halogenated carbonate compound used in the halogen-based flame retardant, halogenated carbonate compounds wherein the content of structural units represented by general formula (10) below are at least 60 mol% of all structural units and the specific viscosity is 0.015 to 0.1 are preferably used.

[Chem. 13]

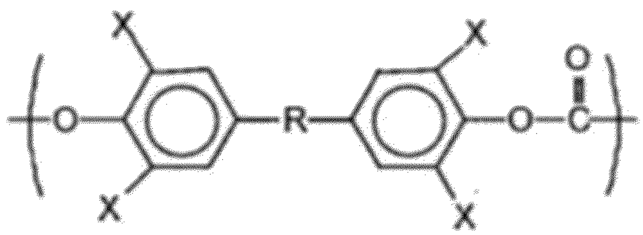

(1 0)

In general formula (10), X is a bromine atom, and R is an alkylene group having 1 to 4 carbon atoms, an alkylidene group having 1 to 4 carbon atoms, or $-SO_2-$.

In the formula (10), R preferably represents a methylene group, an ethylene group, an isopropylidene group, or $-SO_2-$, and particularly preferably an isopropylidene group.

It is preferable that the brominated polycarbonate have a small amount of residual chloroformate group terminals,

and the terminal chlorine amount be 0.3 ppm or less, more preferably 0.2 ppm or less. The terminal chlorine amount can be determined by dissolving a sample in methylene chloride, adding 4-(p-nitrobenzyl)pyridine to react with the terminal chlorine (terminal chloroformate), and measuring the product with an ultraviolet/visible spectrophotometer (U-3200 manufactured by Hitachi, Ltd.). When the terminal chlorine amount is 0.3 ppm or less, thermal stability of the resin composition is improved, molding at higher temperatures is possible, and as a result, a resin composition having more excellent processability may be provided.

It is preferable that the brominated polycarbonate have a small amount of residual hydroxyl group terminals. More specifically, the terminal hydroxyl group amount is preferably 0.0005 mol or less, and more preferably 0.0003 mol or less, relative to 1 mol of structural units of the brominated polycarbonate. The terminal hydroxyl group amount can be determined by dissolving a sample in deuterated chloroform and measuring by $^1$H-NMR method. Such a terminal hydroxyl group amount is preferred because thermal stability of the resin composition is further improved.

The halogenated carbonate compound is commercially available, and examples include tetrabromobisphenol A carbonate oligomers (trade names FG-7000 and FG-8500) manufactured by Teijin Limited. These can be used in the present invention.

The content of the halogen-based flame retardant, relative to 100 parts by weight of the component A, is preferably 5 to 35 parts by weight, more preferably 10 to 35 parts by weight, and even more preferably 10 to 30 parts by weight.

(Component F: anti-drip agent)

The anti-drip agent used as component F in the present invention can include fluorine-containing polymers having fibril formability, and such polymers can include polytetrafluoroethylene, tetrafluoroethylene-based copolymers (for example, tetrafluoroethylene/hexafluoropropylene copolymers), partially fluorinated polymers as shown in U.S. Patent No. 4379910, and polycarbonate resins manufactured from fluorinated diphenols. Among these, polytetrafluoroethylene (hereinafter, sometimes referred to as PTFE) is preferable.

PTFE having fibril formability has an extremely high molecular weight, and shows a tendency to become fibrous through bonding of PTFE molecules by an external action such as shear force. The molecular weight is 1,000,000 to 10,000,000, and more preferably 2,000,000 to 9,000,000 in number average molecular weight determined from standard specific gravity. The PTFE can be used in a solid form or an aqueous dispersion liquid form. As the PTFE having fibril formability, a PTFE mixture in a mixed form with another resin can also be used to improve dispersibility in resins and obtain more satisfactory flame retardancy and mechanical characteristics.

Examples of commercial products of the PTFE having fibril formability can include Teflon™ 6-J from Chemours-Mitsui Fluoroproducts Co., Ltd. and Polyflon MPA FA500H and F-201 from Daikin Industries, Ltd. Commercial products of the aqueous dispersion liquid of PTFE can typically include Fluon D-series manufactured by Daikin Industries, Ltd. and Teflon™ 31-JR from Chemours-Mitsui Fluoroproducts Co., Ltd.

A PTFE in a mixed form obtained by (1) a method of mixing an aqueous dispersion liquid of PTFE with an aqueous dispersion liquid or solution of an organic polymer and coprecipitating the mixture to obtain a co-aggregated mixture (method described Japanese Unexamined Patent Publication (Kokai) No. 60-258263 and Japanese Unexamined Patent Publication (Kokai) No. 63-154744), (2) a method of mixing an aqueous dispersion liquid of PTFE with dried organic polymer particles (method described in Japanese Unexamined Patent Publication (Kokai) No. 4-272957), (3) a method of uniformly mixing an aqueous dispersion liquid of PTFE with an organic polymer particle solution and simultaneously removing the media from the mixture (method described in Japanese Unexamined Patent Publication (Kokai) No. 6-220210 and Japanese Unexamined Patent Publication (Kokai) No. 8-188653), (4) a method of polymerizing a monomer for forming an organic polymer in an aqueous dispersion liquid of PTFE (method described in Japanese Unexamined Patent Publication (Kokai) No. 9-95583), or (5) a method of uniformly mixing an aqueous dispersion liquid of PTFE with an organic polymer dispersion liquid and then polymerizing a vinyl-based monomer in the mixed dispersion liquid to obtain a mixture (method described in Japanese Unexamined Patent Publication (Kokai) No. 11-29679) can be used. Commercial products of the PTFE in a mixed form can include "Metablen A3800" (trade name) and "Metablen A3750" from Mitsubishi Chemical Corporation.

The ratio of PTFE in a mixed form, in 100% by weight of a PTFE mixture, is preferably 1 to 60% by weight of PTFE, and more preferably 5 to 55% by weight. When the ratio of PTFE is in such a range, a satisfactory dispersibility of PTFE can be achieved.

Styrene-based monomers as organic polymers used in polytetrafluoroethylene-based mixtures are exemplified by, but are not limited to, styrenes optionally substituted with one or more groups selected from the group consisting of alkyl groups having 1 to 6 carbon atoms, alkoxy groups having 1 to 6 carbon atoms, and halogens, for example, ortho-methylstyrene, meta-methylstyrene, para-methylstyrene, dimethylstyrene, ethyl-styrene, para-tert-butylstyrene, methoxystyrene, fluorostyrene, monobromostyrene, dibromostyrene, and tribromostyrene; vinylxylene, and vinylnaphthalene. The styrene-based monomers can be used independently or by mixing two or more thereof.

The acrylic monomers used as organic polymers used in polytetrafluoroethylene-based mixtures include optionally substituted (meth)acrylate derivatives. Specific acrylic monomers are exemplified by, but are not limited to, (meth)acrylate derivatives optionally substituted with one or more groups selected from the group consisting of alkyl groups having 1 to 20 carbon atoms, cycloalkyl groups having 3 to 8 carbon atoms, aryl groups, and glycidyl groups, for example, (meth)acrylonitrile, methyl (meth)acrylate, ethyl (meth)acrylate, propyl (meth)acrylate, butyl (meth)acrylate, amyl (meth)acrylate, hexyl (meth)acrylate, 2-ethylhexyl (meth)acrylate, cyclohexyl (meth)acrylate, octyl (meth)acrylate, dodecyl (meth)acrylate, phenyl (meth)acrylate, benzyl (meth)acrylate, and glycidyl (meth)acrylate; maleimides optionally substituted with an alkyl group having 1 to 6 carbon atoms or an aryl group, for example, maleimide, N-methylmaleimide, and N-phenyl-maleimide; maleic acid, phthalic acid, and itaconic acid. The acrylic monomers can be used independently or by mixing two or more thereof. Among these, (meth)acrylonitrile is preferable.

The amount of a unit from an acrylic monomer, relative to 100 parts by weight of units of a styrene-based monomer, included in the organic polymer, is preferably 8 to 11 parts by weight, more preferably 8 to 10 parts by weight, and even more preferably 8 to 9 parts by weight. When the amount of a unit from an acrylic monomer is less than 8 parts by weight, coating strength may be reduced, and when the amount is greater than 11 parts by weight, the surface appearance of a molded article can be deteriorated.

The remaining water content in the polytetrafluoroethylene-based mixture in the present invention is preferably 0.5% by weight or less, more preferably 0.2 to 0.4% by weight, and even more preferably 0.1 to 0.3% by weight. When the remaining water content is greater than 0.5% by weight, an adverse effect on flame retardancy may be caused.

The process of manufacturing the polytetrafluoroethylene-based mixture in the present invention includes a step of forming a coating layer including one or more monomers selected from the group consisting of a styrene-based monomer and an acrylic monomer in the presence of an initiator, on the outside of the branched polytetrafluoroethylene. It is preferable to further include a step of drying to be performed so that the remaining water content is 0.5% by weight or less, preferably 0.2 to 0.4% by weight, and more preferably 0.1 to 0.3% by weight after the step of forming the coating layer. The step of drying can be performed by using, for example, a method known in the art, such as a hot-air drying or vacuum drying method.

As the initiator used in the polytetrafluoroethylene-based mixture in the present invention, one to be used for a polymerization reaction of styrene-based and/or acrylic monomer(s) can be used without any limitations. Examples of the initiator include, but not limited thereto, cumyl hydroperoxide, di-tert-butyl peroxide, benzoyl peroxide, hydrogen peroxide, and potassium peroxide. One or more types of the above initiators can be used in the polytetrafluoroethylene-based mixture in the present invention, depending on reaction conditions. The amount of the initiator is freely selected within the range to be adopted in consideration of the amount of polytetrafluoroethylene and the amount/type of the monomer(s), and 0.15 to 0.25 parts by weight of the initiator, based on the amount of the entire composition, is preferably used.

The polytetrafluoroethylene-based mixture in the present invention was manufactured according to a suspension polymerization method, by the following procedure.

First, water and a branched polytetrafluoroethylene dispersion (solid concentration: 60%, polytetrafluoroethylene particle size: 0.15 to 0.3 μm) were placed in a reactor, and thereafter an acrylic monomer, a styrene monomer and cumene hydroperoxide as a water-soluble initiator were added thereto under stirring to perform a reaction at 80 to 90°C for 9 hours. After completion of the reaction, water was removed by centrifugation with a centrifuge for 30 minutes, to obtain a paste-like product. The paste of the product was then dried by a hot-air dryer at 80 to 100°C for 8 hours. The product dried was then pulverized to obtain the polytetrafluoroethylene-based mixture in the present invention.

The suspension polymerization method does not require a polymerization step by emulsification dispersion in an emulsion polymerization method exemplified in Japanese Examined Patent Publication (Kokoku) No. 3469391, and thus does not require an electrolyte salt for coagulation and precipitation of an emulsifier and latex after polymerization. For a polytetrafluoroethylene mixture manufactured by an emulsion polymerization method, an emulsifier and an electrolyte salt in the mixture are easily incorporated and hardly removed, and it is thus difficult to decrease sodium metal ions and potassium metal ions from such an emulsifier and such an electrolyte salt. Since the polytetrafluoroethylene-based mixture (component B) used in the present invention is manufactured by a suspension polymerization method and thus such emulsifier and electrolyte salt are not used, sodium metal ions and potassium metal ions in the mixture can be decreased, and thermal stability and hydrolysis resistance can be improved.

In the present invention, coated branched PTFE can be used as the anti-drip agent. A coated branched PTFE is a polytetrafluoroethylene-based mixture consisting of branched polytetrafluoroethylene particles and an organic polymer, and has a coating layer consisting of an organic polymer, preferably a polymer comprising units from a styrene-based monomer and/or units from an acrylic monomer, on the outside of the branched polytetrafluoroethylene. The coating layer is formed on the surface of the branched polytetrafluoroethylene. The coating layer preferably comprises a copolymer of a styrene-based monomer and an acrylic monomer.

The polytetrafluoroethylene contained in the coated branched PTFE is branched polytetrafluoroethylene. If the polytetrafluoroethylene contained is not branched polytetrafluoroethylene, the anti-drip effect is insufficient when the addition of polytetrafluoroethylene is small. The branched polytetrafluoroethylene is particulate and has a particle size of

preferably 0.1 to 0.6 μm, more preferably 0.3 to 0.5 μm, and even more preferably 0.3 to 0.4 μm. When the particle size is less than 0.1 μm, surface appearance of a molded article is excellent, but commercial availability of polytetrafluoroethylene having a particle size of less than 0.1 μm is difficult. When the particle size is more than 0.6 μm, the surface appearance of a molded article may be poor. The number average molecular weight of the polytetrafluoroethylene used in the present invention is preferably $1 \times 10^4$ to $1 \times 10^7$, and more preferably $2 \times 10^6$ to $9 \times 10^6$. Generally, polytetrafluoroethylene having a high molecular weight is more preferable in terms of stability. Either a powder or dispersion liquid form can be used.

The content of the branched polytetrafluoroethylene in the coated branched PTFE, relative to a total weight of 100 parts by weight of the coated branched PTFE, is preferably 20 to 60 parts by weight, more preferably 40 to 55 parts by weight, even more preferably 47 to 53 parts by weight, particularly preferably 48 to 52 parts by weight, and most preferably 49 to 51 parts by weight. When the ratio of the branched polytetrafluoroethylene is within such a range, a satisfactory dispersibility of the branched polytetrafluoroethylene can be achieved.

The content of the component F, relative to 100 parts by weight of the component A, is preferably 0.1 to 3 parts by weight, more preferably 0.15 to 2 parts by weight, and even more preferably 0.5 to 1.5 parts by weight. A content higher than this range leads to increased costs, and processability may be insufficient. A content lower than this range results in insufficient flame retardancy, and tensile strength may also be degraded. A content lower than this range may result in insufficient flame retardancy. The ratio of the component F above indicates the net amount of the anti-drip agent, and in the case of PTFE in a mixed form, indicates the net PTFE amount.

(Component G: liquid crystal polyester resin)

The liquid crystal polyester resin used as component G in the present invention is preferably a thermotropic liquid crystal polyester resin, and has the property that polymer molecule chains are arranged in a certain direction in a molten state. The form of such an arrangement state may be any of nematic, smectic, cholesteric, and discotic forms, or two or more forms may be exhibited. The structure of the liquid crystal polyester resin may be any of main chain-type, side chain-type, and rigid main chain/bent side chain-type structures, and a main chain-type liquid crystal polyester resin is preferred.

The property of the form of the arrangement state, namely, an anisotropic molten phase can be confirmed by a conventional polarization test method with an orthogonal polarizer. More specifically, the anisotropic molten phase can be confirmed by observing a molten sample mounted on a Leitz hot stage, at a magnification of 40x under a nitrogen atmosphere, with a Leitz polarizing microscope. The polymer in the present invention allows polarized light to penetrate and exhibit optical isotropy even in a molten static state, when tested between orthogonal polarizers.

The heat resistance of the liquid crystal polyester resin may be within any range, and appropriate one is molten at a portion having a temperature close to the processing temperature of a polycarbonate resin, to form a liquid crystal phase. More preferred one has a deflection temperature under load (ISO75-1/2, a condition of a load of 1.8 Mpa) of liquid crystal polyester, of 150 to 280°C, preferably 150 to 250°C. Such liquid crystal polyester belongs to the type II of so-called heat resistance classification. In the case of having has such heat resistance, liquid crystal polyester achieves excellent processability as compared with one of the type I higher in heat resistance and satisfactory flame retardancy as compared with one of the type III lower in heat resistance.

For the liquid crystal polyester resin used in the present invention, one containing a polyester unit and a polyester amide unit is preferred, an aromatic polyester resin and an aromatic polyester amide resin are preferred, and a liquid crystal polyester resin containing partially an aromatic polyester unit and an aromatic polyester amide unit in the same molecular chain is the most preferred example.

The entire aromatic polyester resin and the aromatic polyester amide resin which have a unit constituent component from one or more compounds selected from the group consisting of aromatic hydroxycarboxylic acids, aromatic hydroxyamines, and aromatic diamines are particularly preferred. More specific examples include 1) a liquid crystal polyester resin mainly synthesized from one or more compounds selected from the group consisting of aromatic hydroxycarboxylic acids and derivatives thereof, 2) a liquid crystal polyester resin mainly synthesized from a) one or more compounds selected from the group consisting of aromatic hydroxycarboxylic acids and derivatives thereof, b) one or more compounds selected from the group consisting of aromatic dicarboxylic acids, alicyclic dicarboxylic acids and derivatives thereof, and c) one or more compounds selected from the group consisting of aromatic diols, alicyclic diols, aliphatic diols and derivatives thereof, 3) a liquid crystal polyester amide resin mainly synthesized from a) one or more compounds selected from the group consisting of aromatic hydroxycarboxylic acids and derivatives thereof, b) one or more compounds selected from the group consisting of aromatic hydroxyamine, aromatic diamines and derivatives thereof, and c) one or more compounds selected from the group consisting of aromatic dicarboxylic acids, alicyclic dicarboxylic acids and derivatives thereof, and 4) a liquid crystal polyester amide resin mainly synthesized from a) one or more compounds selected from the group consisting of aromatic hydroxycarboxylic acids and derivatives thereof, b) one or more compounds selected from the group consisting of aromatic hydroxyamine, aromatic diamines and derivatives thereof, c) one or more compounds selected from the group consisting of aromatic dicarboxylic acids, alicyclic dicarboxylic

acids and derivatives thereof, and d) one or more compounds selected from the group consisting of aromatic diols, alicyclic diols, aliphatic diols and derivatives thereof, and 1) the liquid crystal polyester resin mainly synthesized from one or more compounds selected from the group consisting of aromatic hydroxycarboxylic acids and derivatives thereof is preferred.

A molecular weight adjuster may also be, if necessary, further used in combination with the above constituent component.

Preferred examples of a specific compound used for synthesis of the liquid crystal polyester resin used in the polycarbonate resin composition of the present invention are naphthalene compounds such as 2,6-naphthalenedicarboxylic acid, 2,6-dihydroxynaphthalene, 1,4-dihydroxynaphthalene and 6-hydroxy-2-naphthoic acid, biphenyl compounds such as 4,4'-diphenyldicarboxylic acid and 4,4'-dihydroxybiphenyl, para-substituted benzene compounds and nuclear-substituted benzene compounds thereof (the substituent is selected from chlorine, bromine, methyl, phenyl, and 1-phenylethyl), such as p-hydroxybenzoic acid, terephthalic acid, hydroquinone, p-aminophenol and p-phenylenediamine, meta-substituted benzene compounds such as isophthalic acid and resorcinol, and compounds represented by general formula (11), (12) or (13) below. Among these, p-hydroxybenzoic acid and 6-hydroxy-2-naphthoic acid are particularly preferred, and a liquid crystal polyester resin formed by mixing both these acids is preferred. For the proportions of both these acids, the proportion of the former is preferably in the range of 90 to 50 mol% and more preferably in the range of 80 to 65 mol%, and the proportion of the latter is preferably in the range of 10 to 50 mol% and more preferably in the range of 20 to 35 mol%.

[Chem. 14]

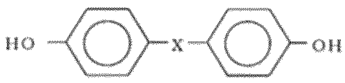
(1 1)

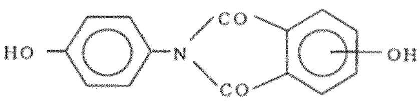
(1 2)

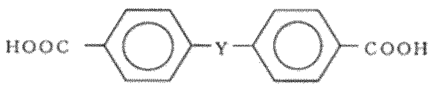
(1 3)

(where X is a group selected from the group consisting of an alkylene group and an alkylidene group having 1 to 4 carbon atoms, -O-, -SO-, $-SO_2-$, -S-, and -CO-, and Y is a group selected from the group consisting of $-(CH_2)_n-$ (n = 1 to 4) and $-O(CH_2)_nO-$ (n = 1 to 4).)

A unit from polyalkylene terephthalate not exhibiting an anisotropic molten phase, other than the above constituent components, may be present partially in the same molecular chain in the liquid crystal polyester resin used in the present invention. In this case, the number of carbon atoms in the alkyl group is 2 to 4.

A basic method of manufacturing the liquid crystal polyester resin used in the present invention is not particularly limited, and the liquid crystal polyester resin can be manufactured according to a known polycondensation method of a liquid crystal polyester resin. The above liquid crystal polyester resin generally exhibits a logarithmic viscosity (IV value) of at least about 2.0 dl/g, for example, about 2.0 to 10.0 dl/g, when dissolved at 60°C in a concentration of 0.1% by weight in pentafluorophenol.

From the above characteristics, the liquid crystal polyester resin is formed into a fine fibril form during injection molding, and exerts the reinforcing effect on a matrix with the form being retained in the course of cooling and solidification. Therefore, it is possible to impart tensile strength by the liquid crystal polyester resin. A reduction in the viscosity of a resin composition with the liquid crystal polyester resin also provides an effect which can allow for reductions in injection speed and resin pressure.

The content of the component G, relative to 100 parts by weight of the component A, is preferably 1 to 20 parts by weight, more preferably 1 to 15 parts by weight, and even more preferably 2 to 10 parts by weight. In the case where the content is too low out of the above range, tensile strength may be lowered. Also in the case where the content is greater than the above range, tensile strength may be lowered.

(Other additives)

The resin composition of the present invention can be further blended with other thermoplastic resin (for example, a polyarylate resin, a fluororesin, a polyester resin, and/or a polyphenylene sulfide resin), an antioxidant (for example, a hindered phenol-based compound), an impact improver, an ultraviolet absorber, a light stabilizer, a release agent, a lubricant, a colorant, an inorganic filling agent (for example, talc, mica, wollastonite, and/or kaolin), and/or the like, in ranges that do not impair the object of the present invention.

In manufacturing the resin composition of the present invention, any method is adopted. Examples can include a method of premixing the components and any other component, and then melt-kneading and pelletizing the premixed product. Examples of a premixing means can include a Nauta mixer, a V-type blender, a Henschel mixer, a mechanochemical apparatus, and an extrusion mixer. In the premixing, granulation can also be optionally performed by an extrusion granulator or a briquetting machine. After the premixing, the premixed product is melt-kneaded by a vented melt kneader typified by a vented twin-screw extruder and pelletized with an instrument such as a pelletizer. Other examples of the melt kneader can a Banbury mixer, a kneading roll, and a constant heat stirring vessel, and a vented twin-screw extruder is preferred. There can also be adopted any other method in which the components and any other component are not premixed and are each independently supplied to a melt kneader typified by a vented twin-screw extruder.

The polycarbonate resin composition of the present invention, obtained as described above, can be used to manufacture various products by injection molding of the pellet manufactured as described above. A resin melt-kneaded by an extruder can also be directly formed into a sheet, a film, a profile extrusion-molded article, and an injection molded article, without the pellet manufactured.

In the injection molding, a molded article can be obtained not only by a usual molding method, but also by using an injection molding method appropriately adopted depending on the object, such as injection compression molding, injection press molding, gas-assisted injection molding, foam molding (including one by pouring of a supercritical fluid), insert molding, in-mold coating molding, insulated mold molding, rapid heating-and-cooling mold molding, two-color molding, sandwich molding, or ultra-high speed injection molding. Advantages of these various molding methods have been widely known. Molding of a cold-runner system and molding of a hot-runner system can be each selected. The polycarbonate resin composition of the present invention can also be extrusion-molded into various profile extrusion-molded articles, or molded into a sheet.

Examples of a molded article in which the resin composition of the present invention is utilized include electric/electronic parts such as connectors, sockets, relay parts, coil bobbins, optical pickups, oscillators, print circuit boards, and computer-associated parts; parts associated with semiconductor manufacturing processes, such as IC trays and wafer carriers; parts and housing materials for home electric appliances such as computers, VTR, televisions, irons, air conditioners, stereos, cleaners, refrigerators, rice cookers, and lighting instruments; lighting instrument parts such as lamp reflectors and lamp holders; acoustic product parts such as compact discs, Laser Disc™, and speakers; communication equipment parts such as ferrules for optical cables, phone parts, facsimile parts, and modems; copier-associated parts such as separation nails and heater holders; mechanical parts such as impellers, fans, gear wheels, gears, bearings, motor parts, and cases; automobile parts such as automobile mechanism parts, engine parts, parts in engine rooms, electric parts, and interior parts; cooking devices such as microwave cooking pans and heat-resistant dishes; heat insulation and sound insulation materials such as floor materials and wall materials, supporting materials such as beams and posts, construction materials or civil construction materials such as roof materials; airplane parts, spacecraft parts, members for radiation facilities such as atomic furnaces, members for marine facilities, washing jigs, parts for optical instruments, valves, pipes, nozzles, filters, membranes, parts for medical instruments, and medical materials, parts for sensors, sanitary appointments, sporting goods, and leisure goods.

The embodiment of the invention that is currently considered the best by the present inventor is one that satisfies the preferable range of each of the above requirements, and for example, representative examples thereof are described in the following Examples. Naturally, the present invention is not limited to these embodiments

EXAMPLES

The present invention will be further described with reference to the Examples below. Note that evaluation was performed by the following methods.

(Evaluation of polycarbonate resin composition)

(i) Tensile strength: Tensile strength measurement was carried out according to ISO527 (tensile speed: 5 mm/min, test temperature; 23°C) with a tensile test piece obtained by the following method.

(ii) Wet heat resistance: A tensile test piece obtained by the following method was treated in an atmosphere at 85°C and a relative humidity of 85% for 1000 hours, and thereafter the test piece was taken out and cooled to 23°C. The tensile strength (each tensile strength before and after wet-heat treatment) was then measured according to ISO527. The resulting values were applied to the following formula, to calculate the retention rate of tensile strength.

Retention rate (%) of tensile strength = (tensile strength after wet-heat treatment/tensile strength before wet-heat treatment) $\times$ 100

(iii) Chemical resistance: After a tensile test piece obtained by the following method was used and strain was loaded thereto at 0.7% by a three-point bending method, a cloth impregnated with Magiclean (manufactured by Kao Corporation) was applied thereto and left to still stand at 23°C for 96 hours, and whether or not the change in appearance occurred was then confirmed. Note that evaluation was carried out according to the following criteria.

A: no change in appearance is observed.
B: the occurrence of fine crack is observed.
C: large crack leading to fracture is observed.

(iv) Processability: Evaluation about stability during extrusion was carried out according to the following criteria.

A; strand is stable during extrusion.
B: strand is slightly unstable during extrusion, but can be pelletized.
C; strand is considerably unstable during extrusion, and is hardly pelletized or leads to a large amount of volatile gas.

[Examples 1 to 20 and Comparative Examples 1 to 11]

A mixture composed of components other than the component B was supplied through a first supply port of an extruder, at each composition shown in Table 2 to Table 4. Such a mixture was obtained by mixing by a V-type blender. The component B was supplied with a side feeder through a second supply port. A pellet was obtained by extrusion with a 30-mmφ-diameter vented twin-screw extruder (TEX30α-38.5BW-3V manufactured by The Japan Steel Works, Ltd.), and melt-kneading at a screw rotational speed of 200 r.p.m., a discharge rate of 25 kg/h, and a vent vacuum of 3 kPa. Such extrusion was carried out at a temperature of 300°C from the first supply port to a die portion. A part of the resulting pellet was dried by a hot-air circulation type dryer at 120°C for 6 hours, and then molded with an injection molding machine at a cylinder temperature of 310°C and a mold temperature of 120°C, into an ISO tensile test piece for evaluation.
Note that the components denoted by symbols in Tables 1 to 4 are as follows.

(Component A)

A-1: aromatic polycarbonate resin (polycarbonate resin powder having a viscosity average molecular weight of 22,400 produced by a conventional method from bisphenol A and phosgene, Panlite L-1225WP (trade name) manufactured by Teijin Limited.)

(Component B)

B-1: glass fiber: chopped glass fiber (manufactured by Nitto Boseki Co., Ltd.: CSG 3J-459 (trade name), cut length 3 mm)

B-2: glass fiber: flat cross-sectional chopped glass fiber (manufactured by Nitto Boseki Co., Ltd.: CSG 3PA-810 (trade name), longer size 28 μm, shorter size 7 μm, cut length 3 mm)
B-3: glass fiber: chopped glass fiber (manufactured by Nippon Electric Glass Co., Ltd.: ECS 03 T-211H (trade name), cut length 3 mm)
B-4: glass fiber: flat cross-sectional chopped glass fiber (manufactured by Nippon Electric Glass Co., Ltd.: ECS 03 T-211-FGF (trade name), longer size 28 μm, shorter size 7 μm, cut length 3 mm)
B-5 (Comparative Example): glass fiber: chopped glass fiber (manufactured by Nitto Boseki Co., Ltd.: CSG 3PE-455 (trade name), cut length 3 mm)
B-6 (Comparative Example): glass fiber: chopped glass fiber (manufactured by Nitto Boseki Co., Ltd.: CSG 3PE-937 (trade name), cut length 3 mm)

B-7 (Comparative Example): glass fiber: flat cross-sectional chopped glass fiber (manufactured by Nitto Boseki Co., Ltd.: CSG 3PA-830 (trade name), longer size 28 μm, shorter size 7 μm, cut length 3 mm)

<Gas analysis>

Fifty mg of each of the glass fibers B-1, B-2, B-5, B-6 and B-7 was heated at 600°C for 12 seconds, and a gas obtained was analyzed. The gas analysis was performed by GC-MS (gas chromatography mass spectrometry) with JMS-Q1500GC manufactured by JEOL Ltd. Whether or not carboxylic anhydride was detected from the gas obtained was examined, and evaluation was made according to the following criteria.

Furthermore, 50 mg of each of the glass fibers B-3, B-4, B-5, B-6 and B-7 was heated at 400°C for 12 seconds, and a gas obtained was analyzed. Note that the analysis instrument used here was the same as described above. Whether or not the compound represented by the above general formula (1) was detected from the gas obtained was examined, and evaluation was made according to the following criteria.

The results are shown in Table 1. Note that the detection limit in the analysis method is 0.1 ng.

A: carboxylic anhydride is detected
B: the compound represented by the above general formula (1) is detected
C: carboxylic anhydride and the compound represented by the above general formula (1) are not detected

[Table 1]

| Glass fiber | B-1 | B-2 | B-3 | B-4 | B-5 | B-6 | B-7 |
|---|---|---|---|---|---|---|---|
| Result of gas analysis | A | A | B | B | C | C | C |
| Substance detected | 1,2,3,6-Tetrahydrophthalic anhydride | 1,2,3,6-Tetrahydrophthalic anhydride | 4,8,12,16-Tetraoxaeicosan-1-ol | 4,8,12,16-Tetraoxaeicosan-1-ol | - | - | - |

(Component C)

C-1: bisphenol A-type epoxy resin (manufactured by Mitsubishi Chemical Corporation, jER-1256 (trade name), weight average molecular weight 50,000)
C-2: bisphenol A-type phenoxy resin (manufactured by Gabriel Phenoxies, PKHH (trade name), weight average molecular weight 52,000)

(Component D)

D-1: phosphorus-based stabilizer (triethyl phosphonoacetate JC-224 (trade name) manufactured by Johoku Chemical Co., Ltd.)

D-2: phosphorus-based stabilizer (trimethyl phosphate (TMP) manufactured by Daihachi Chemical Industry Co., Ltd.)
D-3: phosphorus-based stabilizer (bis(2,4-di-t-butylphenyl)pentaerythritol diphosphite SONGNOX6260PW (trade name) manufactured by Songwon International Japan K.K.)

(Component E)

E-1: halogenated carbonate compound (brominated carbonate oligomer having bisphenol A backbone, Fireguard FG-7000 (trade name) manufactured by Teijin Limited., bromine content = 52%)

E-2: potassium diphenylsulfonesulfonate (KSS (trade name) manufactured by Arichem, LLC)
E-3: cyclic phenoxyphosphazene (Rabitle FP-110T (trade name) manufactured by Fushimi Pharmaceutical Co., Ltd.)

(Component F)

F-1: anti-drip agent (polytetrafluoroethylene (Polyflon MPA FA-500H (trade name) manufactured by Daikin

Industries, Ltd.)

(Component G)

G-1: liquid crystal polyester resin (liquid crystal polyester resin pellet containing repeating unit derived from p-hydroxybenzoic acid and repeating unit derived from 6-hydroxy-2-naphthoic acid, LAPEROS A-950RX (trade name) manufactured by POLYPLASTICS CO., LTD., melting point = 275 to 285°C)

(Other components)

Release agent-1: Hi-WAX HW405MP (low molecular weight polyethylene, manufactured by Mitsui Chemicals, Inc.)
Release agent -2: Licowax E powder (montanate ester wax manufactured by Clariant Japan K.K.) Colorant: carbon black master pellet manufactured by melt-kneading 100 parts by weight in total of four components including 40 parts by weight of carbon black (manufactured by Mitsubishi Chemical Corporation: carbon black MA-100 (trade name)), 3 parts by weight of white mineral oil (manufactured by Exxon Mobil Corporation: Primol N382 (trade name)), 0.2 parts by weight of montanate ester wax (manufactured by Clariant Japan K.K.: Licowax E powder (trade name)), and 56.8 parts by weight of bisphenol A-type polycarbonate resin (manufactured by Teijin Limited: CM-1000 (trade name), viscosity average molecular weight 16,000), with twin-screw extruder.

[Table 2]

| Item | | | | Example | | | | | | | | | |
|---|---|---|---|---|---|---|---|---|---|---|---|---|---|
| | | | | 1 | 2 | 3 | 4 | 5 | 6 | 7 | 8 | 9 | 10 |
| Composition | Component A | A-1 | part(s) by weight | 100 | 100 | 100 | 100 | 100 | 100 | 100 | 100 | 100 | 100 |
| | Component B | B-1 | " | 85 | | | | 85 | 85 | 85 | 45 | 110 | 85 |
| | | B-2 | " | | 85 | 25 | 120 | | | | | | |
| | | B-5 | " | | | | | | | | | | |
| | | B-6 | " | | | | | | | | | | |
| | | B-7 | " | | | | | | | | | | |
| | Component C | C-1 | " | 4 | 4 | 4 | 4 | 2 | 8 | 4 | | 5 | 4 |
| | | C-2 | " | | | | | | | | 4 | | |
| | Component D | D-1 | " | | 0.2 | 0.2 | 0.2 | 0.2 | 0.2 | 1 | 0.2 | 0.2 | |
| | | D-2 | " | 0.2 | | | | | | | | | |
| | | D-3 | " | | | | 0.2 | | | | | | |
| | Component E | E-1 | " | | | | 25 | | | | | 25 | |
| | | E-2 | " | | | | | | | | 0.02 | | |
| | Component F | F-1 | " | | | | 1 | | | 1 | 1 | 1 | |
| | Component G | G-1 | " | | | | 8 | | | | | | |
| | Other components | Release agent-1 | " | 1 | | 0.7 | 1 | 1 | 1 | 1 | | 1 | 1 |
| | | Release agent -2 | " | | | | | | | | 1 | | |
| | | Colorant | " | 1 | | 0.7 | 1 | 1 | 1 | 1 | 1 | 1 | 1 |

(continued)

| Item | | | Example 1 | 2 | 3 | 4 | 5 | 6 | 7 | 8 | 9 | 10 |
|---|---|---|---|---|---|---|---|---|---|---|---|---|
| Evaluation results | Tensile strength | MPa | 155 | 167 | 132 | 172 | 143 | 153 | 152 | 141 | 158 | 125 |
| | Wet heat resistance | % | 96 | 94 | 98 | 94 | 85 | 92 | 83 | 96 | 95 | 86 |
| | Chemical resistance | - | A | A | B | A | A | A | A | A | A | A |
| | Processability | - | A | A | A | A | A | B | A | A | A | A |

[Table 3]

| Item | | | | Example 11 | 12 | 13 | 14 | 15 | 16 | 17 | 18 | 19 | 20 |
|---|---|---|---|---|---|---|---|---|---|---|---|---|---|
| Composition | Component A | A-1 | part(s) by weight | 100 | 100 | 100 | 100 | 100 | 100 | 100 | 100 | 100 | 100 |
| | Component B | B-3 | " | 85 | | | | 85 | 85 | 85 | 85 | 85 | 85 |
| | | B-4 | " | | 85 | 25 | 120 | | | | | | |
| | | B-5 | " | | | | | | | | | | |
| | | B-6 | " | | | | | | | | | | |
| | | B-7 | " | | | | | | | | | | |
| | Component C | C-1 | " | 4 | 4 | 4 | 4 | 2 | 8 | 4 | 4 | | 4 |
| | | C-2 | " | | | | | | | | | 4 | |
| | Component D | D-1 | " | | 0.2 | 0.2 | 0.2 | 0.2 | 0.2 | 1 | 0.2 | 0.2 | |
| | | D-2 | " | 0.2 | | | | | | | | | |
| | | D-3 | " | | | | 0.2 | | | | | | |
| | Component E | E-1 | " | | | | 25 | | | | | | |
| | | E-3 | " | | | | | | | | 10 | 10 | |
| | Component F | F-1 | " | | | | 1 | | | | 1 | 1 | |
| | Component G | G-1 | " | | | | 8 | | | | | | |
| | Other components | Release agent-1 | " | 1 | | 0.7 | 1 | 1 | 1 | 1 | 1 | | 1 |
| | | Release agent -2 | " | | | | | | | | | 1 | |
| | | Colorant | " | 1 | | 0.7 | 1 | 1 | 1 | 1 | 1 | 1 | 1 |
| Evaluation results | Tensile strength | | MPa | 160 | 164 | 132 | 168 | 143 | 153 | 152 | 161 | 159 | 122 |
| | Wet heat resistance | | % | 97 | 95 | 98 | 92 | 85 | 92 | 83 | 91 | 90 | 86 |
| | Chemical resistance | | - | A | A | B | A | A | A | A | A | A | A |
| | Processability | | - | A | A | A | A | A | B | A | A | A | A |

[Table 4]

| Item | | | | Comparative Example | | | | | | | | | | |
|---|---|---|---|---|---|---|---|---|---|---|---|---|---|---|
| | | | | 1 | 2 | 3 | 4 | 5 | 6 | 7 | 8 | 9 | 10 | 11 |
| Composition | Component A | A-1 | part(s) by weight | 100 | 100 | 100 | 100 | 100 | 100 | 100 | 100 | 100 | 100 | 100 |
| | Component B | B-1 | " | | | | | | 85 | 85 | | | | |
| | | B-2 | " | | | | 15 | 150 | | | | | | |
| | | B-3 | | | | | | | | | | | 85 | 85 |
| | | B-4 | | | | | | | | | 15 | 150 | | |
| | | B-5 | " | 85 | | | | | | | | | | |
| | | B-6 | " | | 85 | | | | | | | | | |
| | | B-7 | " | | | 85 | | | | | | | | |
| | Component C | C-1 | " | 4 | 4 | 4 | 4 | 4 | | 12 | 4 | 4 | | 12 |
| | | C-2 | " | | | | | | | | | | | |
| | Component D | D-1 | " | 0.2 | 0.2 | 0.2 | 0.2 | 0.2 | 0.2 | 0.2 | 0.2 | 0.2 | 0.2 | 0.2 |
| | | D-2 | " | | | | | | | | | | | |
| | | D-3 | " | | | | | | | | | | | |
| | Component E | E-1 | " | | | | | | | | | | | |
| | | E-3 | " | | | | | | | | | | | |
| | Component F | F-1 | " | | | | | | | | | | | |
| | Component G | G-1 | " | | | | | | | | | | | |
| | Other components | Release agent -1 | " | 1 | 1 | 1 | 1 | 1 | 1 | 1 | 1 | 1 | 1 | 1 |
| | | Release agent -2 | " | | | | | | | | | | | |
| | | Colorant | " | 1 | 1 | 1 | 1 | 1 | 1 | 1 | 1 | 1 | 1 | 1 |
| Evaluative results | Tensile strength | | MPa | 155 | 154 | 175 | 117 | Unevaluable due to processability NG | *115* | Unevaluable due to processability NG | 114 | Unevaluable due to processability NG | 77 | Unevaluable due to processability NG |
| | Wet heat resistance | | % | 72 | 71 | 64 | 96 | | 73 | | 97 | | 74 | |
| | Chemical resistance | | - | C | C | C | B | | C | | B | | C | |
| | Processability | | - | A | A | A | A | C | A | C | A | C | A | C |

It can be seen from Table 2 to Table 4 above that a polycarbonate resin composition excellent in tensile strength, wet heat resistance, chemical resistance and processability is obtained by blending of the present invention.

## Claims

1. A polycarbonate resin composition containing, 100 parts by weight of (A) an aromatic polycarbonate-based resin (component A), 20 to 130 parts by weight of (B) a glass fiber (component B) and 1 to 10 parts by weight of (C) a phenoxy resin and/or an epoxy resin (component C), wherein the component B contains at least one compound selected from the group consisting of a surface treatment agent and a sizing agent, and a gas component obtained by heating the component B at 600°C for 12 seconds contains carboxylic anhydride, or a gas component obtained by heating the component B at 400°C for 12 seconds contains a compound represented by general formula (1) below:

[Chem. 1]

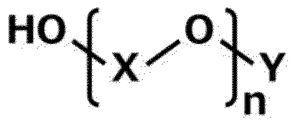

(1)

wherein in the above general formula (1), n is an integer of 1 to 10, X each independently represents an alkylene group having 1 to 5 carbon atoms, and Y each independently represents an alkyl group having 1 to 5 carbon atoms.

2. The polycarbonate resin composition according to claim 1, wherein the carboxylic anhydride is 1,2,3,6-tetrahydrophthalic anhydride.

3. The polycarbonate resin composition according to claim 1, wherein X in the compound represented by the above general formula (1) is an alkylene group having 3 carbon atoms.

4. The polycarbonate resin composition according to claim 1 or 3, wherein the compound represented by the above general formula (1) is 4,8,12,16-tetraoxaeicosan-1-ol.

5. The polycarbonate resin composition according to any one of claims 1 to 4, wherein the component C is a bisphenol A-type phenoxy resin and/or a bisphenol A-type epoxy resin.

6. The polycarbonate resin composition according to any one of claims 1 to 5, further containing, relative to 100 parts by weight of the component A, 0.01 to 3 parts by weight of (D) a phosphorus-based flame retardant (component D).

7. The polycarbonate resin composition according to any one of claims 1 to 6, further containing, relative to 100 parts by weight of the component A, 0.01 to 35 parts by weight of (E) a flame retardant (component E) and 0.1 to 3 parts by weight of (F) an anti-drip agent (component F).

8. The polycarbonate resin composition according to any one of claims 1 to 7, further containing, relative to 100 parts by weight of the component A, 1 to 20 parts by weight of (G) a liquid crystal polyester resin (component G).

9. The polycarbonate resin composition according to claim 8, wherein the component G is a liquid crystal polyester resin containing a repeating unit derived from p-hydroxybenzoic acid and a repeating unit derived from 6-hydroxy-2-naphthoic acid.

10. A molded article formed from the polycarbonate resin composition according to any one of claims 1 to 9.

## INTERNATIONAL SEARCH REPORT

International application No.
**PCT/JP2023/027507**

**A. CLASSIFICATION OF SUBJECT MATTER**

***C08L 69/00***(2006.01)i; ***C08K 3/013***(2018.01)i; ***C08K 7/02***(2006.01)i; ***C08K 7/14***(2006.01)i; ***C08K 9/04***(2006.01)i; ***C08L 63/00***(2006.01)i; ***C08L 67/04***(2006.01)i; ***C08L 71/10***(2006.01)i
FI: C08L69/00; C08K3/013; C08K7/02; C08K7/14; C08K9/04; C08L63/00 A; C08L67/04; C08L71/10

According to International Patent Classification (IPC) or to both national classification and IPC

**B. FIELDS SEARCHED**

Minimum documentation searched (classification system followed by classification symbols)

C08L69/00; C08K3/013; C08K7/02; C08K7/14; C08K9/04; C08L63/00; C08L67/04; C08L71/10

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2020/184577 A1 (TEIJIN LTD) 17 September 2020 (2020-09-17) entire text | 1-10 |
| A | JP 2019-167498 A (TEIJIN LTD) 03 October 2019 (2019-10-03) entire text | 1-10 |
| A | WO 2014/148641 A1 (TEIJIN LTD) 25 September 2014 (2014-09-25) entire text | 1-10 |
| A | JP 10-195286 A (TEIJIN CHEM LTD) 28 July 1998 (1998-07-28) entire text | 1-10 |
| A | JP 2017-132857 A (UMG ABS LTD) 03 August 2017 (2017-08-03) entire text | 1-10 |
| A | JP 2017-179105 A (UMG ABS LTD) 05 October 2017 (2017-10-05) entire text | 1-10 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **02 October 2023** | **17 October 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

INTERNATIONAL SEARCH REPORT

International application No.
**PCT/JP2023/027507**

**C. DOCUMENTS CONSIDERED TO BE RELEVANT**

| Category* | Citation of document, with indication, where appropriate, of the relevant passages | Relevant to claim No. |
|---|---|---|
| A | JP 2018-80254 A (UMG ABS LTD) 24 May 2018 (2018-05-24)<br>entire text | 1-10 |
| A | JP 61-53354 A (DAINIPPON INK & CHEM INC) 17 March 1986 (1986-03-17)<br>entire text | 1-10 |
| A | WO 2019/044626 A1 (MITSUI CHEMICALS INC) 07 March 2019 (2019-03-07)<br>entire text | 1-10 |

Form PCT/ISA/210 (second sheet) (January 2015)

**INTERNATIONAL SEARCH REPORT**
**Information on patent family members**

International application No.
**PCT/JP2023/027507**

| Patent document cited in search report | Publication date (day/month/year) | Patent family member(s) | Publication date (day/month/year) |
|---|---|---|---|
| WO 2020/184577 A1 | 17 September 2020 | US 2022/0127455 A1<br>entire text<br>CN 113557270 A | |
| JP 2019-167498 A | 03 October 2019 | (Family: none) | |
| WO 2014/148641 A1 | 25 September 2014 | US 2016/0024301 A1<br>entire text<br>EP 2977409 A1<br>CN 105051110 A | |
| JP 10-195286 A | 28 July 1998 | (Family: none) | |
| JP 2017-132857 A | 03 August 2017 | US 2018/0371186 A1<br>entire text<br>CN 108291082 A | |
| JP 2017-179105 A | 05 October 2017 | WO 2017/169912 A1 | |
| JP 2018-80254 A | 24 May 2018 | (Family: none) | |
| JP 61-53354 A | 17 March 1986 | (Family: none) | |
| WO 2019/044626 A1 | 07 March 2019 | US 2021/0078901 A1<br>entire text<br>EP 3677639 A1<br>CN 111051602 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2683662 B
- JP 2009292953 A, Kokai
- JP 2013221072 A, Kokai
- JP 6172508 A, Kokai
- JP 8027370 A, Kokai
- JP 2001055435 A, Kokai
- JP 2002117580 A, Kokai
- US 4379910 A
- JP 60258263 A, Kokai
- JP 63154744 A, Kokai
- JP 4272957 A, Kokai
- JP 6220210 A, Kokai
- JP 8188653 A, Kokai
- JP 9095583 A, Kokai
- JP 11029679 A, Kokai
- JP 3469391 B, Kokoku